# EUROPÄISCHE PATENTSCHRIFT

(11) **EP 1 485 868 B1**
(45) Veröffentlichungstag und Bekanntmachung des Hinweises auf die Patenterteilung: **31.08.2005**
(21) Anmeldenummer: 03714813.7
(22) Anmeldetag: 12.03.2003
(51) Int. Cl.: G06K 15/12, H04N 1/40

(54) **ELEKTROFOTOGRAFISCHES VERFAHREN UND DRUCKSYSTEM ZUM ERZEUGEN EINES DRUCKBILDES**
ELECTROPHOTOGRAPHIC METHOD AND PRINTING SYSTEM FOR GENERATION OF A PRINTED IMAGE
PROCEDE ELECTROPHOTOGRAFIQUE ET SYSTEME D'IMPRESSION PERMETTANT DE PRODUIRE UNE PRESENTATION D'IMPRESSION

(30) Priorität: 15.03.2002 DE 10211530
(43) Veröffentlichungstag der Anmeldung: 15.12.2004
(73) Patentinhaber: Océ Printing Systems GmbH, 85586 Poing (DE)
(72) Erfinder: PETSCHIK, Benno, 85570 Markt Schwaben (DE)
(74) Vertreter: Schaumburg, Thoenes, Thurn, Landskron
(86) Internationale Anmeldenummer: PCT/EP2003/002566
(87) Internationale Veröffentlichungsnummer: WO 2003/079280

(56) Entgegenhaltungen:
- EP-A- 0 347 358
- US-A- 4 625 222
- US-A- 4 847 641
- US-A- 4 896 173
- US-A- 5 134 495
- US-A- 5 767 982

## Beschreibung

Die Erfindung betrifft ein elektrofotografisches Verfahren zum Erzeugen eines Druckbildes, bei dem eine zu erzeugende Linie eines Druckbildes Bildelemente enthält, die matrixförmigen Rasterzellen zugeordnet sind. Durch eine mit Hilfe mindestens einer Lichtquelle ausgesendeten Lichtmenge wird entsprechend jedem Bildelement zugeordneten Daten die Ladung einer dem jeweiligen Bildelement zugeordneten Rasterfläche einer lichtempfindlichen Fotoleiterschicht geändert. Weiterhin betrifft die Erfindung ein elektrofotografisches Drucksystem und ein Computerprogramm zum Erzeugen eines Druckbildes sowie ein Datenverarbeitungssystem zum Umwandeln von Druckdaten.

Derzeit übliche elektrofotografische Drucksysteme erzeugen Druckbilder mit einer Auflösung von 240 dpi, 300 dpi, 400 dpi und 600 dpi. Die Maßeinheit dpi (dots per inch) gibt die Anzahl der Punkte an, die auf einer Strecke von 2,54 cm (entspricht 1 Zoll) darstellbar sind. Durch gestiegene Anforderungen an die Druckqualität nimmt der Anteil von Drucksystemen mit einer Auflösung von 600 dpi stetig zu. Um Dokumente und Druckvorlagen, die zur Ausgabe auf einem Drucksystem mit 240 dpi oder 400 dpi erstellt worden sind, auf einem 600 dpi-Drucksystem auszudrucken, müssen die vorhandenen Druckdaten derart weiterverarbeitet werden, dass Druckdaten zur Ausgabe auf einem Drucksystem mit einer Auflösung von 600 dpi erzeugt werden. Aus dem Dokument WO 98/43207-A1 ist ein Verfahren bekannt, um einen 240 dpi- sowie einen 400 dpi-Druckdatenstrom in einen 600 dpi-Druckdatenstrom umzuwandeln.

Bei bekannten elektrofotografischen Drucksystemen wird zum Erzeugen des Druckbildes ein latentes Ladungsbild mit in einem vorgegebenen Abstand aneinandergereihter Lichtquellen, z.B. Leuchtdioden (LED - Light Emitting Diode), auf einem lichtempfindlichen Fotoleitermaterial erzeugt. Die Auflösung des Drucksystems ist durch den Abstand der aneinandergereihten Lichtquellen fest vorgegeben und liegt bei derzeit üblichen Druckern z.B. bei 600 dpi. Beim Drucken eines Quell-Bildes mit einer Auflösung von z.B. 240 dpi oder 400 dpi auf einem 600 dpi-Drucksystem müssen aus den Quell-Bilddaten Ziel-Bilddaten mit einer Auflösung von 600 dpi erzeugt werden. Die Bildinhalte des Quell-Bildes, wie z.B. horizontale Linien, vertikale Linien und geneigte Linien sowie Kreise oder ähnliche Elemente, sollen im Ziel-Bild möglichst unverfälscht dargestellt werden. Wenn die Auflösung des Ziel-Bildes ein ganzzahliges Vielfaches der Auflösung des Quell-Bildes ist (bei einem ganzzahligen Umsetzungsfaktor), ist eine einfache Umwandlung der Quell-Bilddaten in Ziel-Bilddaten möglich. Die Quell-Bilddaten werden vervielfacht und als Ziel-Bilddaten verwendet. Die Quell-Bilddaten eines Quell-Bildelementes werden z.B. bei einer Verdoppelung der Auflösung vier Quell-Bildelementen zugewiesen, die der identischen Fläche des Quell-Bildelementes entsprechen.

Bei nicht-ganzzahligen Verhältnissen, wie z.B. bei der bereits erwähnten Umsetzung von 240 dpi auf 600 dpi-Druckdaten und von 400 dpi auf 600 dpi-Druckdaten, ist das Erzeugen der Ziel-Bilddaten aus den Quell-Bilddaten wesentlich komplizierter.

Aus der DE 691 20 962 T2 ist ein Verfahren zum Erzeugen eines Druckbildes mit Hilfe eines elektrofotografischen Druckers bekannt. Bei diesem Verfahren wird mit Hilfe eines Laserstrahls ein latentes Ladungsbild auf einem Fotoleiter erzeugt. Dazu wird jeweils einer Rasterfläche mit Hilfe des Laserstrahls eine vorbestimmte Lichtmenge zugeführt, wobei auch an diese Rasterfläche angrenzende Bereiche auf dem Fotoleiter eine Lichtmenge zugeführt wird, da die Auftrefffläche des Laserstrahls größer ist als die mit dem Laserlicht zu belichtende Rasterfläche.

Aus dem Dokument US-A-5 134 495 ist bekannt, dass die Belichtung an einem bestimmten Punkt von der Summe des Lichts abhängig ist, das von mehreren einander überlappenden Lichtquellen auf diesen Punkt gestrahlt wird. Dieses Prinzip wird genutzt, um zusätzliche Bildpunkte außerhalb eines durch einen Drucker physikalisch vorgegebenen Bildpunktrasters zu erzeugen. Dadurch kann die Auflösung eines mit diesem Drucker erzeugten Druckbildes erhöht werden.

Aus dem Dokument US-A-5 767 982 ist ein Verfahren zur Kantenglättung bekannt, bei dem das Licht, das beim Belichten einer Rasterzelle auch auf eine benachbarte Rasterzelle fällt, dazu genutzt wird, eine relativ gerade Kante des im wesentlichen runden Bildpunkts zu erzeugen, wodurch am Rand einer einzufärbenden Rasterzelle eine Kantenglättung erfolgt.

Aus dem bereits erwähnten Dokument WO 98/43207 ist ein Verfahren bekannt, wie eine Umsetzung von Quell-Bilddaten in Ziel-Bilddaten bei einem nicht-ganzzahligen Übertragungsfaktor durchgeführt werden kann. Bei dem aus diesem Dokument bekannten Verfahren sind jedoch die Anpassungsmöglichkeiten der Auflösungskonvertierung an die Eigenschaften des eingesetzten Drucksystems sowie Anpassungsmöglichkeiten des Druckbildes eingeschränkt. Eine Linie mit einer Breite von einem Bildelement bei einer Quell-Bildauflösung von 400 dpi entspricht einer Linienbreite von 1,5 Bildelementen in einem Ziel-Bild mit 600 dpi. Mit bekannten Druckverfahren ist jedoch eine Linie mit einer Breite von 1,5 Bildelementen nicht darstellbar. Bei der Umwandlung der Bilddaten wird bei dem aus dem Dokument WO 98/43207 bekannten Verfahren eine Linie erzeugt, deren Breite zwei Bildelemente des Ziel-Bildes umfasst, wobei ein Bildelement kontinuierlich und das zweite Bildelement alternierend angesteuert wird. Dadurch nimmt der Betrachter des Ziel-Bildes die gleiche eingefärbte Fläche wahr, die er beim Betrachten des Quell-Bildes wahrnehmen würde. Jedoch ist die Kantenschärfe einer solchen Linie nicht für alle Anwendungsfälle zufriedenstellend.

Bei bekannten elektrofotografischen Drucksystemen ist es weiterhin wünschenswert, die Linienbreite von darzustellenden Linien beeinflussen zu können. Vor allem bei Hochleistungsdrucksystemen mit einer Druckleistung von größer 100 Seiten A4 pro Minute kommt es vor, dass senkrechte Linien des ausgegebenen Druckbildes eine andere Breite haben als waagrechte Linien, obwohl die Breite beider Linien jeweils zwei Bildpunkte umfasst.

Aufgabe der Erfindung ist es, ein elektrofotografisches Verfahren und ein Drucksystem zum Erzeugen eines Druckbildes anzugeben, bei denen die Linienbreite darzustellender Linien unabhängig von dem Ziel-Bildraster des genutzten Drucksystems gesteuert werden kann. Weiterhin ist ein Computerprogramm zum Durchführen des Verfahrens und ein Datenverarbeitungssystem zum Umwandeln von Druckdaten anzugeben.

Diese Aufgabe wird durch die Merkmale der unabhängigen Ansprüche gelöst. Vorteilhafte Weiterbildungen sind in den jeweiligen Unteransprüchen angegeben.

Bei dem erfindungsgemäßen Verfahren wird entsprechend jedem Bildelement zugeordneten Daten mit Hilfe mindestens einer Lichtquelle eine Lichtmenge ausgesendet. Durch die ausgesendete Lichtmenge wird die Ladung einer dem jeweiligen Bildelement zugeordneten Rasterfläche einer lichtempfindlichen Fotoleiterschicht geändert. Die Lichtquelle gibt entsprechend ihrer Lichtverteilungskurve auch einen Teil der Lichtmenge zumindest auf an die Rasterfläche angrenzenden Bereiche benachbarter Rasterflächen ab. Der dem ersten Bildelement zugeordneten ersten Rasterfläche wird mit Hilfe der Lichtquelle eine erste Lichtmenge zugeführt. Der dem zweiten Bildelement zugeordneten zweiten Rasterfläche wird eine von der ersten Lichtmenge verschiedene zweite Lichtmenge zugeführt. Die den aneinandergrenzenden Rasterflächen zugeführte Lichtmenge setzt sich für die erste Rasterfläche aus dem Teil der auf diesen Bereich auftreffenden ersten Lichtmenge und dem Teil der auf diesen Bereich auftreffenden zweiten Lichtmenge zusammen. Entsprechend setzt sich die dem Randbereich der zweiten Rasterfläche zugeführte Lichtmenge aus dem Teil der auf diesen Bereich auftreffenden zweiten Lichtmenge und dem Teil der auf diesen Bereich auftreffenden ersten Lichtmenge zusammen.

Die Ausmaße des Bereichs, dessen Ladung durch die zugeführte erste und zweite Lichtmenge geändert wird, können durch das Variieren der ersten und/oder oder zweiten Lichtmenge sehr präzise gesteuert werden und sind abhängig von den optischen Eigenschaften einer der Lichtquelle zugeordneten Fokussieroptik. Der Bereich der beiden Rasterflächen, dessen Ladung durch die erste und zweite Lichtmenge geändert wird, legt die Linienbreite der zu erzeugenden Linie des Druckbildes fest. Die Breite einer zu druckenden Linie lässt sich durch das erfindungsgemäße Verfahren einfach, steuern oder, z.B. beim Erfassen der Breite der gedruckten Linie, sogar regeln. Die Linienbreite kann durch das erfindungsgemäße Verfahren so präzise eingestellt werden, dass ein Ziel-Druckbild mit dem zugehörigen Quell-Druckbild auch dann beim genauen Betrachten des Ziel-Druckbildes optisch übereinstimmt, wenn ein nicht-ganzzahliger Umsetzungsfaktor vorhanden ist, durch den sich die Auflösung des Ziel-Druckbildes von der Auflösung des Quell-Druckbildes unterscheidet.

Vorgegebene Sollbreiten von Linien können exakt erreicht werden. Insbesondere für die Maschinenlesbarkeit von sogenannten Barcodes ist die Linienbreite der im Barcode enthaltenen Linien zum fehlerfreien Erfassen des Barcodes wesentlich. Die Linienbreite kann durch das erfindungsgemäße Verfahren jedoch auch angepasst werden, um eine Druckbildkompatibilität zu einem anderen Drucksystem zu erhalten. Dadurch kann das Druckbild mehrerer Drucksysteme exakt aufeinander abgestimmt werden, so dass identische Druckbilder bei gleichen Druckdaten erzeugt werden. Bei Drucksystemen, die druckprinzipbedingt eine Anisotropie von horizontalen und vertikalen Linienbreiten haben, kann durch das erfindungsgemäße Verfahren eine Angleichung der horizontalen und vertikalen Linienbreiten erreicht werden.

Bei einer vorteilhaften Ausführungsform ist die zweite Lichtmenge kleiner als die erste Lichtmenge. Die erste Rasterfläche wird durch die erste Lichtmenge unterhalb eines zweiten Potentials entladen. Durch die zweite Lichtmenge und durch den Teil der ersten Lichtmenge, der auf die zweite Rasterfläche auftrifft, wird ein an die erste Rasterfläche angrenzender Bereich der zweiten Rasterfläche unterhalb des zweiten Potentials entladen. Vorteilhaft ist es dabei, wenn die Lichtquelle in mindestens drei Stufen ansteuerbar sind, wobei die Rasterfläche in einer ersten Stufe nicht, in einer zweiten Stufe teilweise und in einer dritten Stufe nahezu vollständig auf ein voreingestelltes Potential entladen wird. Je nach Drucksystem werden beim Entwickeln des durch die Lichtquelle erzeugten latenten Ladungsbildes nur die geladenen Flächen oder nur die entladenen Flächen mit Toner eingefärbt. Durch die Möglichkeit, einzelnen Rasterflächen eine geringere Lichtmenge zuzuführen als anderen Rasterflächen, können Flächen mit Toner eingefärbt werden, die sich über mehrere Rasterzellen erstrecken, wobei die Außengrenzen dieser Fläche nicht mit Grenzen von Rasterflächen übereinstimmen müssen. Dadurch ist es möglich, die Außengrenzen von Flächen, z.B. von Linien, nahezu beliebig auf einem Trägermaterial zu positionieren.

Bei einer Weiterbildung der Erfindung ist das zweite Potential eine Entwicklungsschwelle bei der Entwicklung des Ladungsbildes der Fotoleiterschicht mit Toner. Dadurch werden nur die Bereiche der Fotoleiterschicht mit Toner eingefärbt, deren Ladung unterhalb bzw. oberhalb des zweiten Potentials ge- bzw. entladen ist. Die Außengrenzen der einzufärbenden Flächen lassen sich dadurch besonders einfach festlegen.

Bei einer anderen vorteilhaften Ausführungsform ist die mit Hilfe des erfindungsgemäßen Verfahrens zu erzeugende Linie die Randlinie eines mit Toner einzufärbenden Bereichs. Es werden dabei Rasterflächen von Bildelementen belichtet, die mit Toner nicht einzufärben sind, wobei das zweite Bildelement am äußeren Rand des nicht einzufärbenden Bereichs angeordnet ist. Dadurch wird erreicht, dass die Außengrenzen der mit Toner einzufärbenden Fläche besonders einfach verändert werden können.

Alternativ dazu ist die erzeugte Linie die Randlinie eines mit Toner einzufärbenden Bereichs. Dabei werden Rasterflächen von Bildelementen belichtet, die mit Toner einzufärben sind. Das zweite Bildelement ist am äußeren Rand des einzufärbenden Bereichs angeordnet. Bei dieser alternativen Ausführungsform lassen sich die äußeren Ränder der einzufärbenden Fläche ebenso einfach einstellen.

Bei einer Weiterbildung der Erfindung wird das erfindungsgemäße Verfahren genutzt, um aus Quell-Bilddaten eines Quell-Bildes, dessen Quell-Bildelemente mit einer vorgegebenen ersten Auflösung, z.B. 400 dpi, entsprechend einem Quell-Bildraster angeordnet sind, in Ziel-Bilddaten eines Ziel-Bildes umzuwandeln, dessen Ziel-Bildelemente mit einer von der ersten Auflösung abweichenden um einen Umsetzungsfaktor, z.B. 1,5, verschiedenen zweiten Auflösung, z.B. 600 dpi, entsprechend einem Ziel-Bildraster anzuordnen. Soll dabei eine Linie gedruckt werden, deren Linienbreite im Quell-Bildraster eine Rasterfläche breit ist, so ist diese im Ziel-Bildraster mit einer Breite von 1,5 Rasterflächen darzustellen. Bei bekannten Drucksystemen und Verfahren zum Erzeugen eines Druckbildes ist dies jedoch nicht möglich. Mit Hilfe des erfindungsgemäßen Verfahrens können jedoch auch Linienbreiten mit nahezu beliebiger Breite unabhängig vom vorhandenen Ziel-Bildraster erzeugt werden. Das Ziel-Druckbild kann dadurch sehr einfach angepasst werden, so dass es mit dem Quell-Druckbild optisch übereinstimmt.

Bei einer Weiterbildung dieser Ausführungsform wird das Quell-Bild in matrixförmige Teilbilder unterteilt. Für jedes Quell-Teilbild werden aus den zugehörigen Quell-Bilddaten für ein entsprechendes Ziel-Teilbild entsprechende Ziel-Bilddaten nach für alle Teilbilder gleichen Rechenoperationen ermittelt. Die Position des Ziel-Teilbildes im Ziel-Bild stimmt mit der Position des zugehörigen Quell-Teilbildes im Quell-Bild überein. Mit Hilfe der Teilbilder ist es besonders einfach möglich, die Quell-Bilddaten in Ziel-Bilddaten umzuwandeln. Für das Umwandeln der Quell-Bilddaten in Ziel-Bilddaten für jedes Teilbild wird nur eine relativ geringe Rechenleistung benötigt.

Bei einer anderen Ausführungsform der Erfindung haben die Quell-Bilddaten jedes Quell-Bildelementes eine Wortlänge von 1 Bit. Mit Hilfe des erfindungsgemäßen Verfahrens werden Ziel-Bilddaten erzeugt, wobei die Ziel-Bilddaten eines Ziel-Bildelementes eine Wortlänge von mindestens 2 Bit haben. Dadurch lassen sich die Lichtquellen zum Ändern der Ladung der Fotoleiterschicht in mindestens drei Stufen ansteuern, wobei die Lichtquelle in mindestens 2 Stufen jeweils eine Lichtmenge abgibt und wobei sich die beiden Lichtmengen unterscheiden. Das Umwandeln der Quell-Bilddaten in Ziel-Bilddaten kann dabei durch eine fest verdrahtete Logik und/oder durch Programmmodul erfolgen, dessen Befehle durch eine Datenverarbeitungsanlage abgearbeitet werden. Dadurch können die Ziel-Bilddaten aus Quell-Bilddaten mit Recheneinheiten und/oder Logikschaltungen erzeugt werden, die in bekannten Drucksystemen bereits vorhanden sind. Jedoch ist es auch möglich, das erfindungsgemäße Umwandeln der Quell-Druckdaten in Ziel-Druckdaten mit Hilfe eines separaten Datenverarbeitungssystems durchzuführen.

Bei einer weiteren vorteilhaften Ausführungsform der Erfindung ist die Lichtquelle in 64 Stufen ansteuerbar, wobei sie bei jeder Stufe eine andere Lichtmenge abgibt. Dadurch kann die Linienbreite der zu erzeugenden Linie in sehr kleinen Schritten präzise variiert werden. Die Lichtmenge kann durch die Intensität der Lichtquelle und/oder durch die Einschaltdauer der Lichtquelle einfach gesteuert werden.

Bei einer besonders vorteilhaften Weiterbildung der Erfindung wird die Linienbreite gedruckter Linien durch eine Sensoranordnung ermittelt. Die ermittelte Linienbreite wird mit einem Vorgabewert verglichen. Abhängig vom Vergleichsergebnis wird die Linienbreite nachfolgender Druckbilder angepasst, indem die geladenen und entladenen Bereiche entsprechend dem Vergleichsergebnis verändert werden. Dadurch können Druckbilder unterschiedlicher Drucksysteme sehr einfach vereinheitlicht werden. Bei drucksystembedingt unterschiedlichen Linienbreiten von senkrechten und waagrechten Linien kann mit Hilfe dieser Weiterbildung die Linienbreite dieser Linien angepasst werden, so dass eine einheitliche Linienbreite erzielt wird.

Durch ein erfindungsgemäßes elektrofotografisches Drucksystem zum Erzeugen eines Druckbildes wird erreicht, dass die Linienbreite von zu erzeugenden Linien unabhängig von matrixförmigen Rasterzellen, denen Bildelemente zugeordnet sind, erzeugt werden können. Die Linienbreiten lassen sich somit einfach an Linienbreiten anderer Drucksysteme anpassen, wodurch die Druckbilder unterschiedlicher Drucksysteme vereinheitlicht werden können. Auch bei drucksystembedingten Abweichungen von Linienbreiten vertikaler und horizontaler Linien ist eine Korrektur mit Hilfe des erfindungsgemäßen Drucksystems einfach möglich.

Mit Hilfe eines erfindungsgemäßen Datenverarbeitungssystems werden Quell-Bilddaten in Ziel-Bilddaten derart umgewandelt, dass mit Hilfe der Ziel-Bilddaten eine Lichtquelle zum Belichten einer Rasterzelle einer Fotoleiterschicht in mehreren Stufen ansteuerbar ist, wodurch beim nachfolgenden Entwickeln der belichteten Fotoleiterschicht mit Toner auch nur Bereiche von Ziel-Bildelementen eingefärbt werden. Dadurch ist es möglich, dass ein Ziel-Bild mit Hilfe der Ziel-Bilddaten erzeugt werden kann, dessen eingefärbte Flächen eine hohe Übereinstimmung mit den eingefärbten Flächen des Quell-Bildes aufweisen.

Weitere Merkmale und Vorteile der Erfindung ergeben sich aus der folgenden Beschreibung, welche in Verbindung mit den beigefügten Zeichnungen die Erfindung an Hand von Ausführungsbeispielen näher erläutert. Es zeigen:
- Figur 1: zwei Quell-Bilder mit einer Auflösung von 240 dpi;
- Figur 2: ein Ziel-Bild mit einer Auflösung von 600 dpi;
- Figur 3: ein Quell-Teilbild mit einer Auflösung von 240 dpi und ein zugehöriges Ziel-Teilbild mit einer Auflösung von 600 dpi;
- Figur 4: ein Blockschaltbild eines Boolschen Schaltnetzes zum Umwandeln von Quell-Bilddaten in Ziel-Bilddaten;
- Figur 5: zwei Quell-Bilder mit einer Auflösung von 400 dpi;
- Figur 6: ein Ziel-Bild mit einer Auflösung von 600 dpi;
- Figur 7: ein Quell-Teilbild mit einer Auflösung von 400 dpi und ein zugehöriges Ziel-Teilbild mit einer Auflösung von 600 dpi;
- Figur 8: ein Blockschaltbild eines Boolschen Schaltnetzes zum Umwandeln von Quell-Bilddaten mit einer Auflösung von 400 dpi in Ziel-Bilddaten mit einer Auflösung von 600 dpi;
- Figur 9: ein Ablaufdiagramm zum Umwandeln von Quell-Bilddaten in Ziel-Bilddaten;
- Figur 10: ein Quell-Bild mit einer Auflösung von 240 dpi, in dem eine Linie mit einer Breite von 1 Bildpunkt dargestellt ist;
- Figur 11: die Zuordnung der Ziel-Bilddaten zu Rasterzellen, um die Linie nach Figur 10 mit Hilfe eines 600 dpi-Drucksystems darzustellen;
- Figur 12: die aus den Ziel-Bilddaten nach Fig. 11 mit Hilfe des 600 dpi-Drucksystems erzeugte Linie;
- Figur 13: ein Diagramm, in dem für drei benachbarte Rasterzellen die durch die auf diese Rasterzellen auftreffende Lichtmenge resultierende Ladung der Fotoleiterschicht dargestellt ist, wobei der dritten Rasterzelle eine reduzierte Lichtmenge zugeführt ist;
- Figur 14: ein Diagramm, in dem die nach dem Zuführen der Lichtmenge resultierende Ladung für drei benachbarte Rasterzellen dargestellt ist, wobei die auf die dritte Rasterzelle auftreffende Lichtmenge gegenüber Figur 13 weiter reduziert ist;
- Figur 15: ein Diagramm ähnlich den Diagrammen nach Figur 13 und 14, wobei der dritten Rasterzelle die gleiche Lichtmenge zugeführt wird, wie den ersten beiden Rasterzellen;
- Figur 16: zu Rasterzellen zugeordnete Ziel-Bilddaten bei einer Umwandlung der Quell-Bilddaten nach Figur 10 mit Hilfe eines bekannten Verfahrens;
- Figur 17: ein Ziel-Bild entsprechend der Ziel-Bilddaten nach Figur 16; und
- Figur 18: ein Ablaufdiagramm zum erfindungsgemäßen Konvertieren von Quell-Bilddaten in Ziel-Bilddaten.

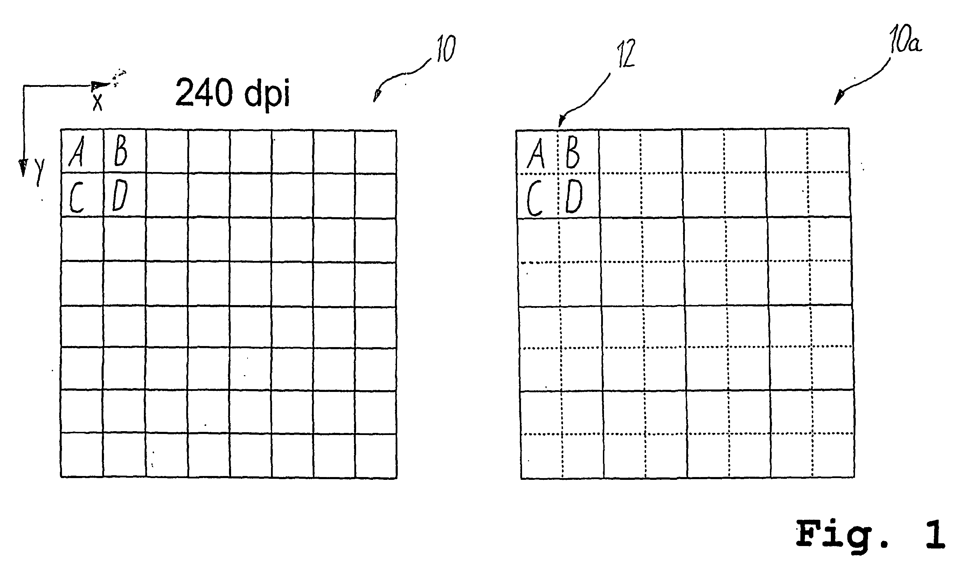

Figur 1 zeigt ein stark vergrößertes Quell-Bild 10 mit einer Auflösung von 240 dpi (Bildpunkte je Inch, 1 Inch = 25,4 mm). Das Quell-Bild 10 enthält matrixförmig angeordnete, quadratische Quell-Bildelemente. Ein erstes Quell-Bildelement, das mit A bezeichnet ist, ist in der ersten Spalte in x-Richtung und in der ersten Zeile in y-Richtung angeordnet. Ein zweites Quell-Bildelement ist mit B bezeichnet und in der zweiten Spalte sowie in der ersten Zeile angeordnet. Ein drittes mit C bezeichnetes Quell-Bildelement ist in der ersten Spalte der zweiten Zeile angeordnet. Das mit D bezeichnete Quell-Bildelement ist in der zweiten Spalte der zweiten Zeile angeordnet. Weitere Quell-Bildelemente sind matrixförmig in den acht Zeilen und acht Spalten der Quell-Bilder angeordnet. In Figur 1 ist weiterhin ein Quell-Bild 10a dargestellt, das im Wesentlichen dem Quell-Bild 10 entspricht. Jeweils vier Quell-Bildelemente der Figur 1, die jeweils ein Quadrat bilden, sind jeweils einem Quell-Teilbild 12 zugeordnet. Die Quell-Bildelemente A, B, C, D bilden das mit 12 bezeichnete Quell-Teilbild. Die Ränder der Quell-Teilbilder 12 sind mit Volllinien dargestellt. Die Ränder der in den Quell-Teilbildern 12 enthaltenen Quell-Bildelemente A, B, C, D sind mit Strichlinien dargestellt.

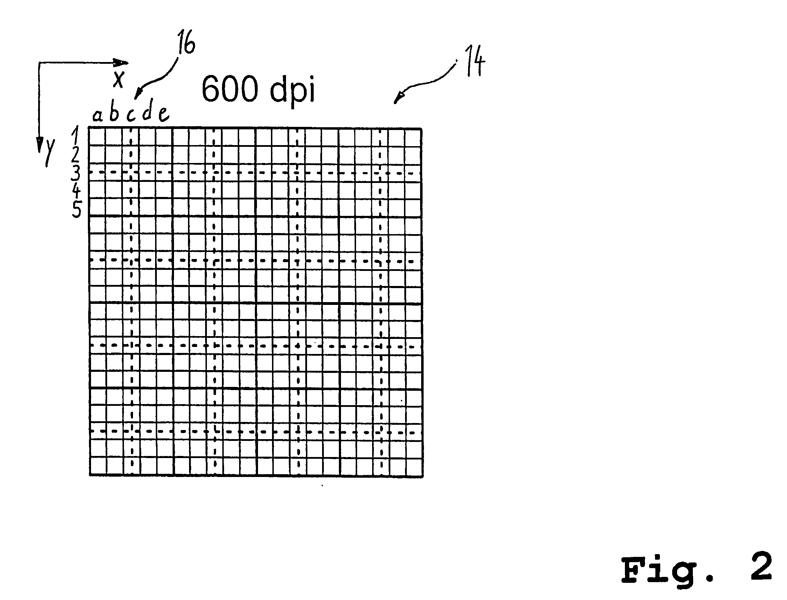

In Figur 2 ist ein stark vergrößertes Ziel-Bild 14 mit einer Auflösung von 600 dpi dargestellt. Das Ziel-Bild 14 ist in Ziel-Teilbilder unterteilt, von denen ein erstes Ziel-Teilbild mit 16 bezeichnet ist. Die Ränder der Ziel-Teilbilder sind mit dicken Volllinien dargestellt. Die Fläche des Ziel-Teilbildes 16 stimmt mit der Fläche des Quell-Teilbildes 12 überein. Das Ziel-Teilbild 16 enthält 25 matrixförmig angeordnete, quadratische Ziel-Bildelemente. Die in x-Richtung angeordneten Spalten des Ziel-Teilbildes 16 sind mit a, b, c, d, e bezeichnet und die in y-Richtung angeordneten Zeilen des Ziel-Teilbildes 16 sind mit 1, 2, 3, 4, 5 bezeichnet. Die Ränder der Flächen, die den Quell-Bildelementen A, B, C, D der Quell-Bilder, 10, 10a entsprechen, sind mit Strichlinien dargestellt. Die Ziel-Bildelemente des Ziel-Teilbildes 16 werden im Folgenden entsprechend ihrer Position mit Hilfe der Spalten- und Zeilenkoordinaten mit a1, a2, a3, a4, a5, b1, b2, b3, b4, b5, c1, c2, c3, c4, c5, d1, d2, d3, d4, d5, e1, e2, e3, e4, e5 bezeichnet.

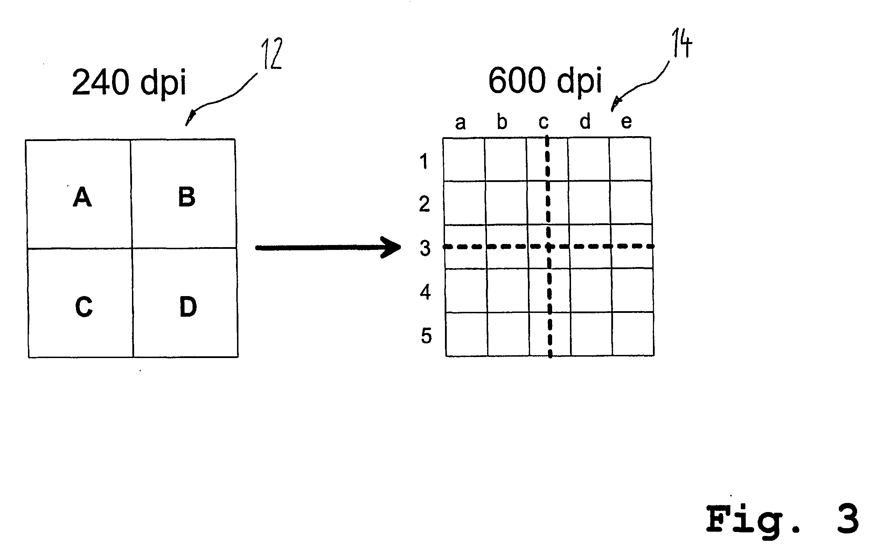

In Figur 3 sind das Quell-Teilbild 12 mit einer Auflösung von 240 dpi und das Ziel-Teilbild 16 mit einer Auflösung von 600 dpi dargestellt. Das Quell-Bildelement A des Quell-Teilbildes 12 entspricht den Ziel-Bildelementen a1, b1, a2, b2 sowie Teilen der Ziel-Bildelemente c1, c2, a3, b3, c3. Die Fläche des Quell-Bildelementes A des Quell-Teilbildes 12 entspricht dem durch Strichlinien abgeteilten linken oberen Bereich des Ziel-Teilbildes 16. Die Fläche des Quell-Bildelementes B des Quell-Teilbildes 12 entspricht der Fläche der Ziel-Bildelemente d1, e1, d2, e2 und Teilen der Ziel-Bildelemente c1, c2, c3, d3, e3. Die Fläche des Quell-Bildelementes B des Quell-Teilbildes 12 entspricht dem durch die Strichlinien im Ziel-Teilbild 16 aufgeteilten rechten oberen Bereich. Die Fläche des Quell-Bildelementes C des Quell-Teilbildes 12 entspricht dem durch die Strichlinien im Ziel-Teilbild 16 begrenzten linken unteren Bereich mit den Ziel-Bildelementen a4, b4, a5, b5 und Teilen der Ziel-Bildelemente a3, b3, c3, c4, c5. Die Fläche des Quell-Bildelementes D des Quell-Teilbildes 12 entspricht dem durch die Strichlinien begrenzten rechten unteren Bereich des Ziel-Teilbildes 16 und enthält die Ziel-Bildelemente d4, e4, d5, e5 sowie Teile der Ziel-Bildelemente c3, d3, e3, c4, c5. Das Quell-Bildelement A des Quell-Teilbildes 12, das eine Auflösung von 240 dpi hat, wird somit mit Hilfe von vier Ziel-Bildelementen a1, b1, a2, b2 sowie mit Bereichen der Ziel-Bildelemente c1, c2, a3, b3, c3 im Ziel-Teilbild 16 mit einer Auflösung von 600 dpi dargestellt. Der Umsetzungsfaktor beträgt 2,5.

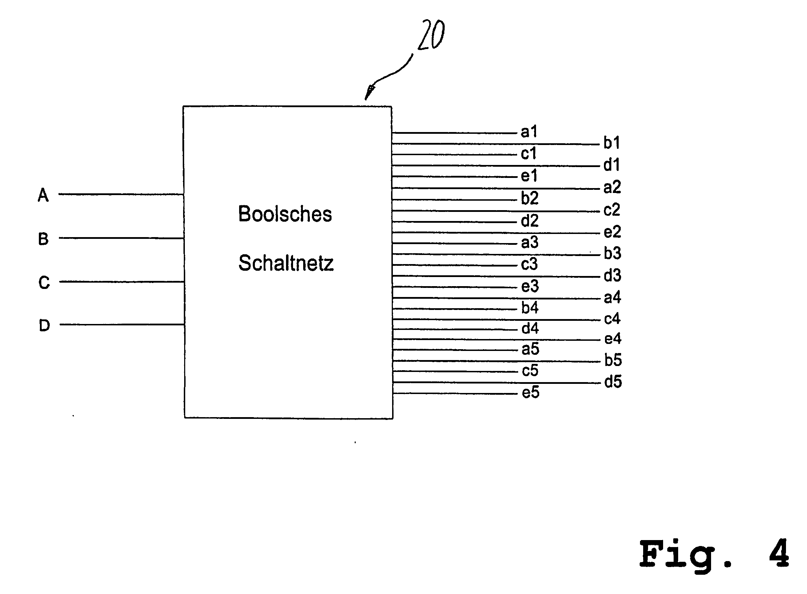

In Figur 4 ist ein Blockschaltbild eines Boolschen Schaltnetzes dargestellt, mit dessen Hilfe aus den Quell-Bilddaten A, B, C, D des Quell-Teilbildes 12 Ziel-Bilddaten der Ziel-Bildelemente a1 bis e5 des Ziel-Teilbildes 16 des Ziel-Bildes 14 erzeugt werden. Die Quell-Bildelemente A, B, C, D des Quell-Bildes 10 sind vorzugsweise derart zu Quell-Teilbildern 12 zusammengefasst, dass sie ein Ziel-Teilbild 16 ergeben, das eine ganzzahlige Anzahl an Ziel-Bildelementen a1 bis e5 enthält. Der Umsetzungsfaktor ergibt sich aus der Anzahl der Ziel-Bildelemente, durch das ein Quell-Bildelement A in x-Richtung und in y-Richtung im Ziel-Bild 14 dargestellt werden muss, um die gleiche Fläche des Quell-Bildelementes A im Ziel-Bild 14 zu belegen. Zu jedem Quell-Bildelement A, B, C, D sind Quell-Bilddaten vorhanden, die die Darstellung des jeweils zugehörigen Quell-Bildelementes A, B, C, D festlegen.

Die Quell-Bilddaten jedes Quell-Bildelementes A, B, C, D haben eine Wortlänge von 1 Bit, wobei der logische Wert 0 ein weißes Quell-Bildelement A, B, C, D definiert und der logische Wert 1 ein mit Toner eingefärbtes Quell-Bildelement A, B, C, D definiert. Je nach Tonerfarbe soll das zugehörige Quell-Bildelement A, B, C, D im Quell-Druckbild als mit Toner eingefärbte Fläche dargestellt werden. Die Quell-Bilddaten sind vorzugsweise in Speicherzellen eines Speichers einer Datenverarbeitungsanlage zweckmäßig so gespeichert, dass in den Speicherzellen mit aufsteigenden Speicheradressen Quell-Bilddaten zu aufeinanderfolgenden Quell-Bildelementen einer Quell-Bildzeile gespeichert sind.

Die Ziel-Bilddaten der Ziel-Bildelemente a1 bis e5 werden mit Hilfe des Boolschen Schaltnetzes 20 aus den Quell-Bilddaten der Quell-Bildelemente A, B, C, D erzeugt. Die Umwandlung der Quell-Bilddaten in Ziel-Bilddaten kann dabei durch eine fest verdrahtete Logik und/oder durch ein Programmmodul des Boolschen Schaltnetzes 20 erfolgen, wobei die Befehle des Programmmoduls durch eine Datenverarbeitungsanlage abgearbeitet werden. Die Ziel-Bilddaten der Ziel-Bildelemente a1 bis e5 haben eine Wortlänge von 2 Bit. Sollen z.B. die Quell-Bildelemente A und C eingefärbt werden und die Quell-Bildelemente B und D nicht, so müssen die Ziel-Bildelemente c1 bis c5 nur zur Hälfte eingefärbt werden, um exakt die gleiche Fläche des Ziel-Druckbildes einzufärben, die beim Ausdruck des Quell-Druckbildes auf einem entsprechenden Drucker eingefärbt wird.

Die Ziel-Druckdaten haben, wie bereits erwähnt, eine Wortlänge von 2 Bit, wodurch sie bis zu vier Darstellungsinformationen enthalten können. Mit Hilfe dieser Darstellungsinformationen kann die ausgesendete Lichtmenge einer Lichtquelle zum Belichten einer dem jeweiligen Ziel-Bildelement a1 bis e5 zugeordnete Rasterfläche einer lichtempfindlichen Fotoleiterschicht in der Art gestaltet werden, dass beim anschließenden Entwickeln dieser Fotoleiterschicht mit Toner die Fläche des Ziel-Bildelementes a1 bis e5 nicht, gering, etwa zur Hälfte oder ganz eingefärbt wird. Der jeweils eingefärbte Bereich ist zumindest bei einer teilweise eingefärbten Rasterzelle, z.B. einer zur Hälfte eingefärbten Rasterzelle, auch abhängig von der Lichtmenge, die die Lichtquelle entsprechend ihrer Lichtverteilungskurve von benachbarten Rasterzellen auf die teilweise einzufärbende Rasterzelle abgibt.

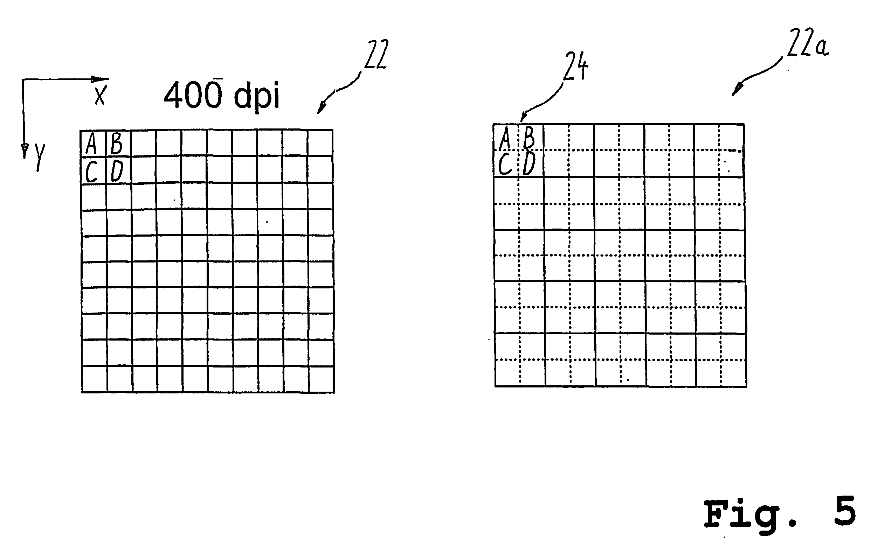

In Figur 5 sind zwei Quell-Druckbilder 22, 22a mit einer Auflösung von 400 dpi in einer stark vergrößerten Darstellung gezeigt. Die Quell-Bilder 22, 22a stimmen im Wesentlichen mit den Quell-Bildern 10, 10a überein. Die Quell-Bildelemente, von denen vier mit A, B, C, D bezeichnet sind, sind matrixförmig angeordneten Rasterzellen zugeordnet. Jedem Quell-Bildelement A, B, C, D sind Quell-Druckdaten zugeordnet. Jeweils vier Rasterzellen von Quell-Bildelementen A, B, C, D sind jeweils einem quadratischen Quell-Teilbild zugeordnet, wobei die Ränder der Quell-Teilbilder im Quell-Druckbild 22a mit Volllinien dargestellt sind und die Ränder der Quell-Bildelemente A, B, C, D mit Strichlinien. Die vier Quell-Bildelemente A, B, C, D sind zu einem Quell-Teilbild 24 zusammengefasst.

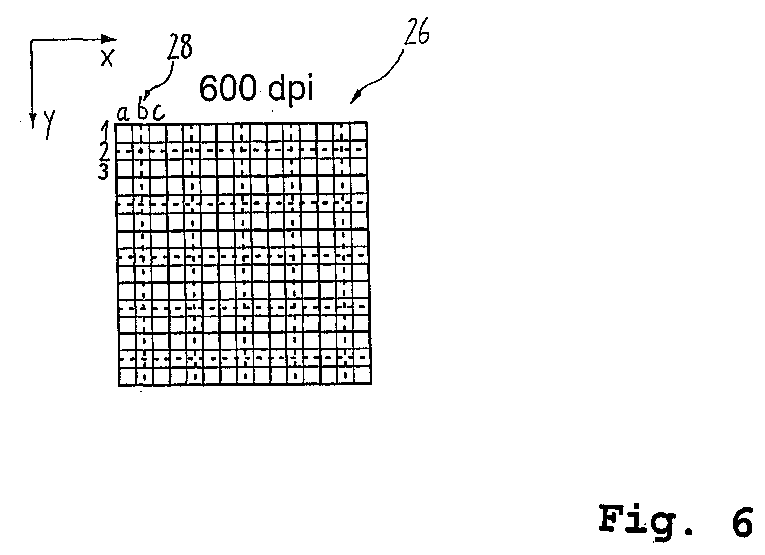

In Figur 6 ist ein Ziel-Druckbild 26 dargestellt. Das Ziel-Druckbild 26 enthält Ziel-Bildelemente, die matrixförmig angeordneten quadratischen Rasterzellen zugeordnet sind. Das Ziel-Druckbild 26 hat eine Auflösung von 600 dpi. Der Umsetzungsfaktor vom Quell-Druckbild 22 zum Ziel-Druckbild 26 beträgt 1,5. Die Flächen der Quell-Bildelemente A, B, C, D sind im Ziel-Druckbild 26 jeweils durch Strichlinien angegeben. Das Quell-Bildelement A des Quell-Bildes 22 wird im Ziel-Bild 26 durch das Ziel-Bildelement a1 und Teile der Ziel-Bildelemente b1, a2, b2 dargestellt. Das Quell-Bildelement B des Quell-Bildes 22 wird im Ziel-Bild 26 durch das Ziel-Bildelement c1 sowie durch Teile der Ziel-Bildelemente b1, b2 und c2 dargestellt. Im Ziel-Bild 26 wird das Quell-Bildelement C des Quell-Bildes 22 durch das Ziel-Bildelement a3 sowie durch Teile der Ziel-Bildelemente a2, b2, b3 dargestellt. Das Quell-Bildelement D des Quell-Bildes 22 wird durch das Ziel-Bildelement c3 sowie durch Teile der Ziel-Bildelemente b2, c2 und b3 dargestellt. Die Ziel-Bildelemente a1 bis c3 des Ziel-Bildes 26 ergeben das Ziel-Teilbild 28. Die Fläche des Ziel-Teilbildes 28 stimmt mit der Fläche des Quell-Teilbildes 26 überein.

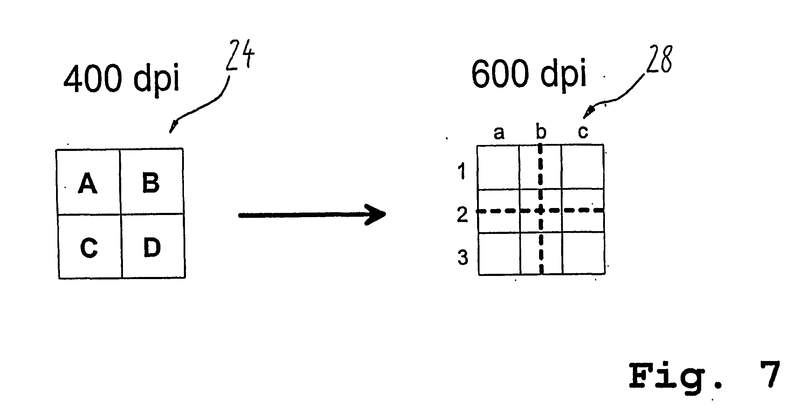

In Figur 7 ist das Quell-Teilbild 24 mit den Quell-Bildelementen A, B, C, D und das Ziel-Teilbild 28 mit den Ziel-Bildelementen a1 bis c3 dargestellt. Die Strichlinien im Ziel-Teilbild 28 geben dabei die Ränder der Flächen der Quell-Bildelemente A, B, C, D im Ziel-Teilbild 28 an. Die Quell-Druckdaten der Quell-Bildelemente A, B, C, D werden entsprechend ihrer Bildinformation in Ziel-Bilddaten der Ziel-Bildelemente a1 bis c3 umgewandelt. Bei einem nicht-ganzzahligen Umsetzungsfaktor ist eine flächenmäßig exakte Darstellung der Quell-Bildelemente A, B, C, D mit einer Auflösung von 600 dpi mit einem Drucksystem mit einer Auflösung von 600 dpi schwierig, da nicht alle Ränder der Quell-Bildelemente A, B, C, D nicht mit Rändern der Ziel-Bildelemente a1 bis c3 übereinstimmen und nur Teile der Ziel-Bildelemente b1, b2, b3 sowie a2, b2, c2 bei einer unterschiedlichen Einfärbung der Quell-Bildelemente A, B, C, D erfolgen muss, um eine exakt übereinstimmende Darstellung des Quell-Druckbildes 22 mit dem Ziel-Druckbild 26 zu erhalten.

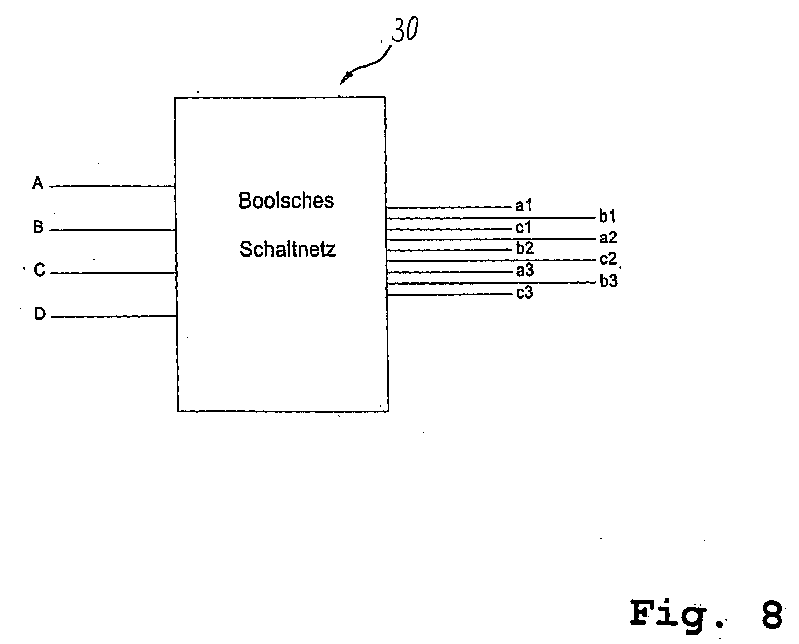

In Figur 8 ist ein Blockschaltbild eines Boolschen Schaltnetzes 30 zum Umwandeln der Quell-Druckdaten der Quell-Bildelemente A, B, C, D in Ziel-Druckdaten der Ziel-Bildelemente a1 bis c3 zu erzeugen. Wie bereits in Zusammenhang mit Figur 4 beschrieben, haben die Quell-Bilddaten üblicherweise eine Wortlänge von 1 Bit und die Ziel-Druckdaten eine Wortlänge von mindestens 2 Bit, damit die Ziel-Druckdaten Informationen enthalten können, um die Lichtmenge einer Lichtquelle, die einer dem jeweiligen Ziel-Bildelement a1 bis c3 zugeordneten Rasterfläche einer lichtempfindlichen Fotoleiterschicht zugeführt wird, derart zu steuern, dass diese Rasterfläche beim späteren Entwickeln der Fotoleiterschicht mit Toner entweder nicht mit Toner eingefärbt wird oder etwa zu einem Viertel mit Toner eingefärbt wird oder etwa zur Hälfte mit Toner eingefärbt wird oder ganz mit Toner eingefärbt wird. Wie bereits im Zusammenhang mit Figur 4 beschrieben, kann das Boolsche Schaltnetz 30 fest verdrahtete Logikschaltungen und/oder ein Programmmodul enthalten, dessen Befehle durch eine Datenverarbeitungsanlage abgearbeitet werden. Beim Boolschen Schaltnetz 30 werden die Quell-Druckdaten der Quell-Bildelemente A, B, C, D jeweils eines Quell-Teilbildes 24 zugeführt. Das Boolsche Schaltnetz 30 erzeugt aus diesen Quell-Druckdaten Ziel-Druckdaten der Ziel-Bildelemente a1 bis c3 des zum Quell-Teilbild 24 zugeordneten Ziel-Teilbildes 28.

Bei anderen Ausführungsformen der Erfindung haben die Ziel-Druckdaten eine Wortlänge von mindestens 6 Bit, wobei die Lichtquelle in 64 Stufen ansteuerbar ist und bei jeder Stufe eine andere Lichtmenge abgibt. Die Lichtmenge kann dabei durch die Intensität und/oder die Einschaltdauer der Lichtquelle gesteuert werden.

Für jedes Quell-Teilbild 24 wird aus den Quell-Bilddaten ein zugehöriges Ziel-Teilbild 28 nach für alle Quell-Teilbilder gleichen Rechenoperationen ermittelt. Das Ziel-Teilbild 28 ist dabei an einer Position im Ziel-Bild 26 angeordnet, die mit der Position des zugehörigen Quell-Teilbildes 24 im Quell-Bild 22 übereinstimmt. Für Ziel-Bildelemente b1, b2, b3, a2, c2, deren Rasterfläche im Quell-Bild Teilbereiche von mindestens zwei Quell-Bildelementen A, B, C, D enthält, werden die Ziel-Bilddaten entsprechend der Flächenanteile der Quell-Bildelemente A, B, C, D am Ziel-Bildelement b1, b2, b3, a2, c2 und den Quell-Bilddaten dieser Quell-Bildelemente erzeugt. Vor allem wenn der Umsetzungsfaktor einen Dezimalbruch mit einem beliebigen Zahlenwert und einem Stellenwert von 5 enthält, ist es vorteilhaft, aus jeweils vier Quell-Bildelementen A, B, C, D, die ein Quadrat bilden, ein Quell-Teilbild 24 festzulegen. Dadurch lassen sich mit kleinstmöglichen Quell-Teilbildern 24 zu den Quell-Bilddaten der Quell-Bildelemente A, B, C, D Ziel-Bilddaten mit Hilfe des Boolschen Schaltnetzes 20, 30 ermitteln.

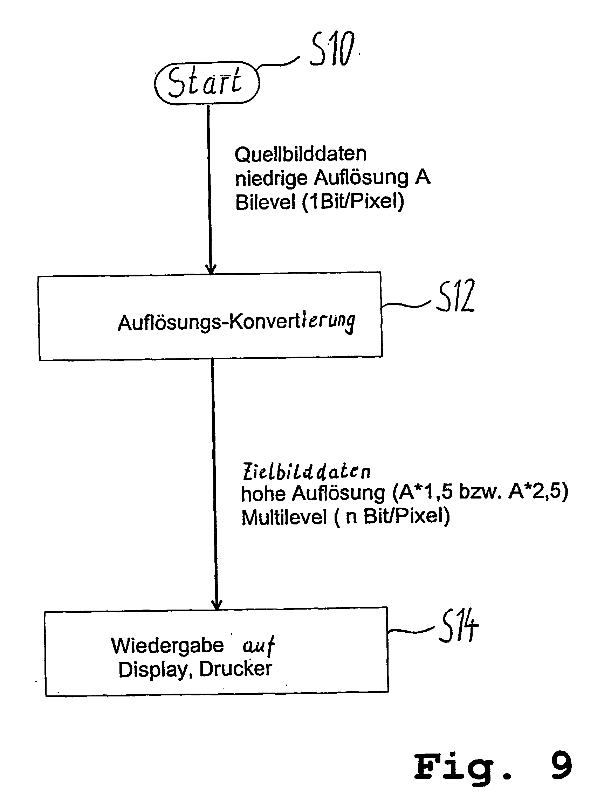

In Figur 9 ist ein Ablaufplan zur Wiedergabe von Quell-Bilddaten auf einem Wiedergabesystem höherer Auflösung dargestellt. Der Ablauf beginnt im Schritt S10. In Schritt S20 erfolgt eine Auflösungskonvertierung, wobei Quell-Bilddaten mit einer ersten Auflösung A, z.B. mit einer Auflösung von 240 dpi, vorhanden sind. Die Quell-Bilddaten haben eine Wortlänge von 1 Bit und sind zur Ansteuerung eines Zeichengenerators in einem sogenannten Bi-Level-Modus geeignet. Ein im Bi-Level-Modus angesteuerter Zeichengenerator führt mit Hilfe einer Lichtquelle einer Rasterzelle eine voreingestellte Lichtmenge zu, wenn die Bilddaten für diese Rasterzelle z.B. den logischen Wert 1 haben. Enthalten die Bilddaten für eine Rasterzelle jedoch den logischen Wert 0, so führt der Zeichengenerator dieser Rasterzelle keine Lichtmenge zu.

In Schritt S20 werden diese Quell-Bilddaten, z.B. mit Hilfe eines Boolschen Schaltnetzes 20, 30, in Ziel-Bilddaten konvertiert, die eine höhere Auflösung und eine Datenwortlänge von mindestens zwei Bit haben. Beträgt die Ziel-Bildauflösung z.B. 600 dpi und die Quell-Bildauflösung 240 dpi, so werden die Quell-Bilddaten mit Hilfe eines Umsetzungsfaktors mit dem Wert 2,5 konvertiert. Bei einer Quell-Bildauflösung von 400 dpi und einer Ziel-Bildauflösung von 600 dpi werden die Quell-Bilddaten mit einem Umsetzungsfaktor 1,5 zu Ziel-Bilddaten konvertiert. Der Umsetzungsfaktor gibt an, wie viele Ziel-Bildelemente in x-Richtung und in y-Richtung benötigt werden, um dieselbe Fläche, die das Quell-Bildelement A, B, C, D im Quell-Bild 22 einnimmt, im Ziel-Bild 26 auszufüllen.

Ist bei anderen Ausführungsbeispielen z.B. eine Auflösung von 400 dpi in ein Ziel-Bild 26 umzusetzen, dass horizontal eine Auflösung von 1200 dpi hat und vertikal eine Auflösung von 600 dpi, so ist für die Quell-Bildelemente A, B, C, D in horizontaler Richtung ein Umsetzungsfaktor von 3 und in vertikaler Richtung ein Umsetzungsfaktor von 1,5 zu verwenden. Insbesondere bei Umsetzungsfaktoren, die einen Dezimalbruch enthalten, ist es vorteilhaft, Bilddaten mit einer Wortlänge von mindestens 2 Bit als Ziel-Bilddaten zu erzeugen. Durch Ziel-Bilddaten mit einer Wortlänge von 2 Bit lassen sich vier Signalzustände darstellen, wobei es mit Hilfe eines sogenannten Multi-Level-Zeichengenerators möglich ist, der zum jeweiligen Ziel-Bildelement a1 bis c3 gehörenden Rasterfläche der Fotoleiterschicht je nach Signalzustand eine andere Lichtmenge zuzuführen. Dabei kann die Lichtquelle beim ersten Signalzustand eine voreingestellte erste Lichtmenge zuführen. Beim zweiten Signalzustand kann dann die Lichtquelle der Rasterfläche eine Lichtmenge zuführen, die etwa dem 0,7-fachen der ersten voreingestellten Lichtmenge entspricht. Beim dritten Signalzustand führt die Lichtquelle der Rasterfläche eine dritte Lichtmenge zu, die etwa der Hälfte der ersten Lichtmenge entspricht. Beim vierten Signalzustand führt die Lichtquelle der Rasterfläche kein Licht zu.

Sind die Daten eines Quell-Bildelementes A eines Quell-Bildes mit einer Auflösung von 400 dpi in Ziel-Bilddaten eines Ziel-Bildes mit einer Auflösung von 600 dpi zu konvertieren, so entspricht das Quell-Bildelement A des Quell-Bildes 22 im Ziel-Bild 26 einer Linie, die 1,5 Ziel-Bildelemente breit und 1,5 Ziel-Bildelemente lang ist. Die Quell-Bilddaten A enthalten den logischen Wert 1, so dass die zugehörige Rasterfläche des Quell-Bildelementes A mit Toner einzufärben ist. Die übrigen Bildelemente B, C, D des Quell-Bildes 24 sind nicht mit Toner einzufärben. Dadurch ergibt sich für die Ziel-Bilddaten des Ziel-Bildelementes a1 der bereits definierte Signalzustand 1, für das Ziel-Bildelement b1, a2, b2 jeweils der zweite Signalzustand. Mit Hilfe der der jeweiligen Rasterfläche zugeführten Lichtmenge wird bei dem im Ausführungsbeispiel eingesetzten Drucksystem eine auf ein eingestelltes Potential geladene Fotoleiterschicht im Bereich dieser Rasterzelle entladen. Beim nachfolgenden Entwicklungsvorgang der Fotoleiterschicht mit Toner wird diese Rasterfläche dann mit Toner eingefärbt, wenn sie unterhalb eines vorbestimmten zweiten Potentials, der sogenannten Entwicklungsschwelle, entladen worden ist.

Die erste Lichtmenge ist so voreingestellt, dass der Rasterzelle so viel Licht zugeführt wird, dass sie beim Entwickeln vollständig mit Toner eingefärbt wird. Die Lichtquelle, mit deren Hilfe der Rasterfläche diese Lichtmenge zugeführt wird, gibt das Licht entsprechend einer Lichtverteilungskurve ab.

Mit Hilfe einer Optik wird das Licht auf einen Bereich fokussiert, in dem die Rasterfläche enthalten ist. Jedoch ergibt sich auch mit einer Fokussieroptik eine Lichtverteilungskurve, die z.B. einer dreidimensionalen Gaußkurve ähnelt. Die Lichtmenge wird so eingestellt, dass auch den Randbereichen der zu belichtenden Rasterzelle ausreichend Lichtenergie zugeführt wird., um die Rasterfläche auch in diesen Bereichen unterhalb des zweiten Potentials zu entladen. Das zweite Potential wird auch als Entwicklungsschwelle bezeichnet.

Ein Teil der Lichtmenge wird dabei auf angrenzende Bereiche benachbarter Rasterflächen abgegeben. Somit wird der Rasterzelle a1 die erste Lichtmenge und der Rasterzelle b1 die zweite Lichtmenge zugeführt, die etwa dem 0,7-fachen der ersten Lichtmenge entspricht. Die Rasterzelle b1 würde durch die zweite Lichtmenge nur in einem sehr kleinen Bereich um deren Mittelpunkt beim Entwickeln mit Toner eingefärbt werden. Jedoch wird der an die Rasterzelle a1 angrenzende Bereich der Rasterzelle b1 auch von dem Teil der ersten Lichtmenge entladen, der beim Belichten der Rasterzelle a1 auf die Rasterzelle b1 abgegeben wird. Zusammen mit der zweiten Lichtmenge, die durch die Lichtquelle der Rasterzelle b1 zugeführt wird, wird etwa die Hälfte der Rasterzelle b1 bis unterhalb der Entwicklungsschwelle entladen, so dass in etwa die an die Rasterzelle a1 angrenzende Hälfte der Rasterzelle b1 mit Toner eingefärbt wird.

Wird die Rasterzelle b1 beispielsweise nur mit der 0,5-fachen Lichtmenge der ersten Lichtmenge belichtet, die dem dritten Signalzustand entspricht, würde ein an die Rasterzelle a1 angrenzender Bereich der Rasterzelle b1 bis unterhalb der Entwicklungsschwelle entladen werden, der etwa einem Drittel der Breite der Rasterzelle b1 entspricht. Es würde sich dann eine zusammenhängende eingefärbte Fläche ausbilden, die eine Ausdehnung von etwa 1,33 Rasterzellen hat.

Wird der Rasterzelle a2 bei diesem Ausführungsbeispiel ebenfalls die zweite Lichtmenge zugeführt, so wird diese Rasterzelle nach dem Entwickeln mit Toner in y-Richtung in etwa zur Hälfte mit Toner eingefärbt. Wird der Rasterzelle b2 die zweite Lichtmenge zugeführt, so wird die der Rasterzelle b2 zugeführte zweite Lichtmenge nur in einem an den Rasterzellen a1, b1, a2 angrenzenden Bereich bis unterhalb des zweiten Potentials entladen, dem beim Belichten der Rasterzellen a1, b1, a2 eine entsprechend große Lichtmenge zugeführt wird. Dadurch ergibt sich im Ziel-Bild 26 ein eingefärbter Bereich, der der Rasterfläche des Ziel-Bildelementes a1 sowie etwa des an die Rasterzelle a1 angrenzenden Bereichs der Rasterzelle b1 und des an die Rasterzelle a1 angrenzenden Bereichs der Rasterzelle a2, der etwa jeweils der halben Rasterzelle b1, a2 entspricht, sowie dem an die Rasterzellen a1, b1, a2 angrenzenden Teil der Rasterzelle b2, der etwa einem Viertel der Rasterzelle b2 entspricht. Somit wird ein Quadrat mit Toner eingefärbt, das etwa dem Quell-Bildelement A des Quell-Bildes 22 entspricht. Das Ziel-Bild 26 gibt somit optisch nahezu identisch das Quell-Bild 22 wieder. Die Wiedergabe der Ziel-Bilddaten erfolgt im Schritt S14 auf einer Anzeigeeinheit oder einem Drucker.

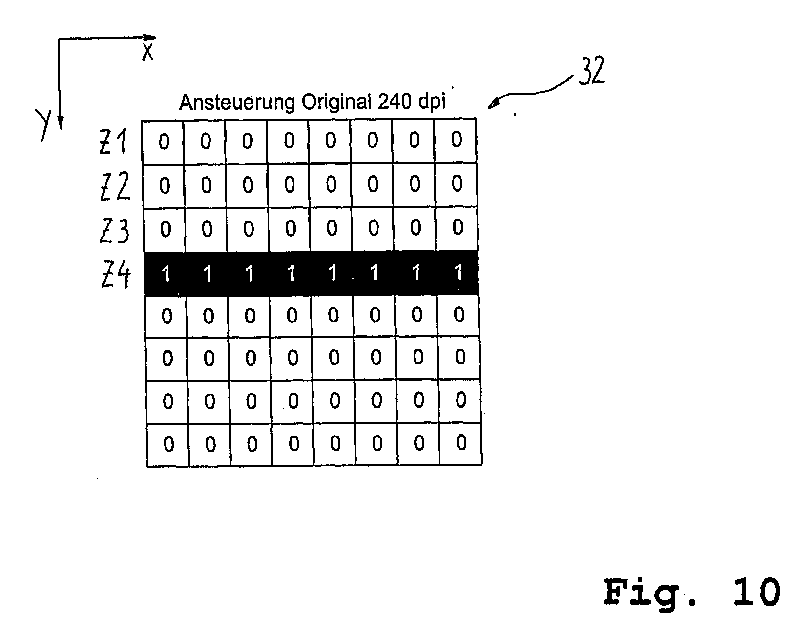

In der Figur 10 ist ein Quell-Bild 32 dargestellt. Das Quell-Bild 32 enthält matrixförmig angeordnete Quell-Bildelemente mit einer Auflösung von 240 dpi. Die Quell-Bilddaten der vierten Zeile Z4 des Quell-Bildes 32 haben alle den Signalzustand 1, wodurch eine waagrechte Linie im Quell-Bild 32 beschrieben wird, die in Zeile Z4 des Quell-Bildes 32 als schwarzer Balken dargestellt ist. Die in diesem schwarzen Balken enthaltenen weißen Ziffern geben lediglich den logischen Signalzustand der enthaltenen Quell-Bildelemente an.

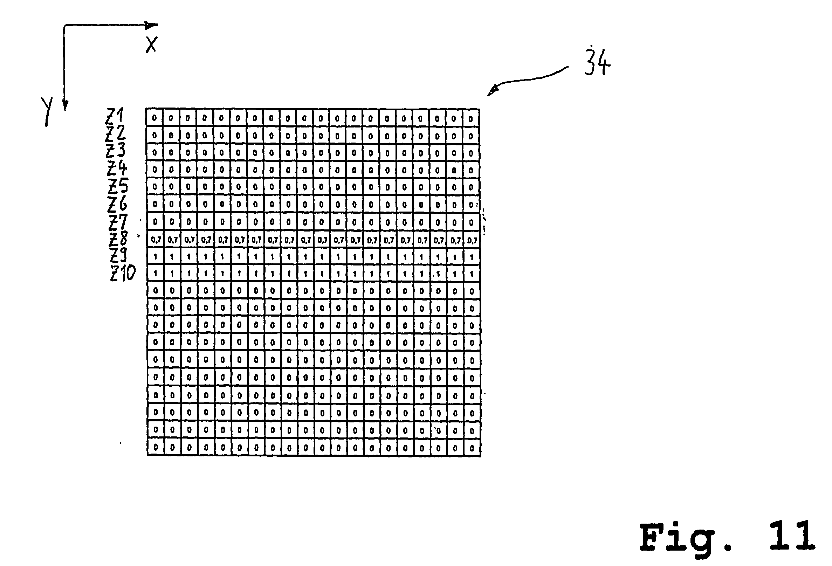

In Figur 11 ist eine matrixförmige Anordnung 34 von Ziel-Bilddaten entsprechend dem Raster eines Ziel-Bildes dargestellt. Mit Hilfe der Ziel-Bilddaten sollen die Lichtquellen des Zeichengenerators des Drucksystems derart angesteuert werden, dass nahezu dieselbe Fläche im Ziel-Bild eingefärbt wird, die im Quell-Bild 32 nach Figur 10 durch die Bildelemente der vierten Zeile Z4 eingefärbt ist. Nach dem Umwandeln der Quell-Bilddaten in Ziel-Bilddaten mit Hilfe des Boolschen Schaltnetzes 20, 30 haben die Ziel-Bilddaten aller Ziel-Bildelemente der achten Zeile Z8 des Ziel-Bildes den Wert 0,7 und alle Ziel-Bildelemente der neunten Z9 und zehnten Zeile Z10 den Wert 1.

Alle Ziel-Bilddaten der Ziel-Bildelemente des Ziel-Bildes haben den Wert 0. Die Ziel-Bilddaten geben den Faktor an, mit dem ein voreingestellter Wert der von den Lichtquellen des Zeichengenerators maximal auszugebenden Lichtmenge multipliziert wird, um die von der Lichtquelle auf die jeweilige Rasterfläche der Fotoleiterschicht abzugebenden Lichtmenge festzulegen. Auf die zu den Ziel-Bildelementen der achten Zeile zugeordneten Rasterflächen wird somit die 0,7-fache eingestellte Lichtmenge und auf die Rasterflächen der Ziel-Bildelemente der neunten und zehnten Zeile jeweils die eingestellte Lichtmenge abgegeben. Auf die Rasterflächen der übrigen Ziel-Bildelemente wird kein Licht abgegeben.

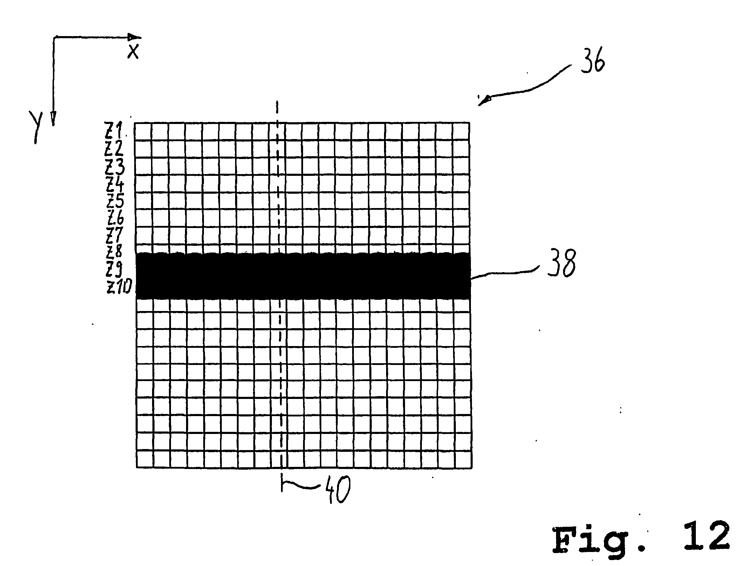

In Figur 12 ist ein Ziel-Bild 36 mit einer Auflösung von 600 dpi dargestellt. Die Volllinien verdeutlichen nur die Ränder der quadratischen Rasterzellen und werden im zu erzeugenden Ziel-Druckbild nicht dargestellt. Der mit Toner eingefärbte Bereich des Ziel-Bildes 36 ist durch eine schwarze Fläche 38 dargestellt. Die mit Toner eingefärbte Fläche 38 des Ziel-Bildes 36 umfasst die Ziel-Bildelemente der Zeilen Z9 und Z10 sowie jeweils einen Bereich der Ziel-Bildelemente der Zeile Z8, der an die Ziel-Bildelemente der Zeile Z9 angrenzt. Zusammen mit den Ziel-Bildelementen der Zeilen Z9 und Z10 bilden die eingefärbten Bereiche der Zeile Z8 eine einheitliche eingefärbte Fläche 38. Den zu den Ziel-Bildelementen der Zeile Z8 zugeordneten Rasterflächen der Fotoleiterschicht wurden, wie bereits in Zusammenhang mit Figur 11 beschrieben, die 0,7-fache Lichtmenge zugeführt, die den Rasterflächen der Ziel-Bildelemente der Zeilen Z9 und Z10 zugeführt worden ist.

Die Lichtmenge, die den Rasterzellen der Ziel-Bildelemente der Zeilen Z9 und Z10 zugeführt worden ist, entlädt die gesamte Fläche der jeweiligen Rasterfläche derart, dass die Fotoleiterschicht auf dieser Fläche derart entladen wird, dass alle Bereiche der Rasterfläche unterhalb eines zweiten Potentials, der sogenannten Entwicklungsschwelle, entladen werden. Beim Zuführen dieser Lichtmenge auf die Rasterflächen, insbesondere auf die Rasterflächen der Ziel-Bildelemente der Zeile Z9, wird auch ein Teil der von der Lichtquelle ausgesendeten Lichtmenge auf einen an die Rasterflächen der Ziel-Bildelemente der Zeile Z9 angrenzenden Bereich der Rasterzellen der Ziel-Bildelemente der Zeile Z8 abgegeben. Im vorliegenden Ausführungsbeispiel ähnelt die Lichtverteilungskurve der Lichtquellen, wie bereits erwähnt, einer dreidimensionalen Gaußverteilung, wobei der Punkt mit der größten zugeführten Lichtmenge etwa im Mittelpunkt der jeweiligen Rasterzelle liegt.

Durch die beim Belichten der Rasterzellen der Zeile Z9 den Rasterzellen der Zeile Z8 zugeführten Lichtmenge und der den Rasterzellen der Zeile Z8 zugeführten Lichtmenge wird nur der Teil der Rasterzellen der Zeile Z8 bis unterhalb der Entwicklungsschwelle entladen, der an die Rasterzellen der Zeile Z9 angrenzt. Dadurch wird nur ein Teil der Fläche der Rasterzellen der Zeile Z8 beim Entwickeln der Fotoleiterschicht mit Toner eingefärbt.

Wird den Rasterzellen der Zeile Z8 etwa die 0,7-fache Lichtmenge zugeführt, die den Rasterzellen der Zeile Z9 und Z10 zugeführt wird, so wird etwa die Hälfte der Fläche der Rasterzellen der Zeile Z8 derart entladen, dass sie bei einer Entwicklung mit Toner eingefärbt wird. Wird den Rasterzellen der Zeile Z8 eine größere Lichtmenge aufgrund der vorliegenden Ziel-Bilddaten zugeführt, z.B. die 0,8-fache Lichtmenge, so wird ein größerer Bereich der Rasterzellen der Zeile Z8 unterhalb der Entwicklungsschwelle entladen. Dadurch wird z.B. etwa ¾ der Fläche der Rasterzellen der Zeile Z8 mit Toner beim Entwickeln eingefärbt. Wird den Rasterzellen der Zeile Z8 jedoch nur etwa die 0,5-fache Lichtmenge zugeführt, so wird etwa nur ¼ der Fläche der Rasterzellen der Zeile Z8 unterhalb der Entwicklungsschwelle entladen, so dass beim anschließenden Entwickeln mit Toner nur etwa ¼ der Fläche der Rasterzellen der Zeile Z8 mit Toner eingefärbt wird, wobei dieser Bereich unmittelbar an die Rasterzellen der Zeile Z9 angrenzt. Die im Ziel-Druckbild 36 mit Toner eingefärbte Fläche 38 entspricht im Wesentlichen der im Quell-Bild 32 durch die Quell-Bildelemente der Zeile 4 eingefärbten Fläche.

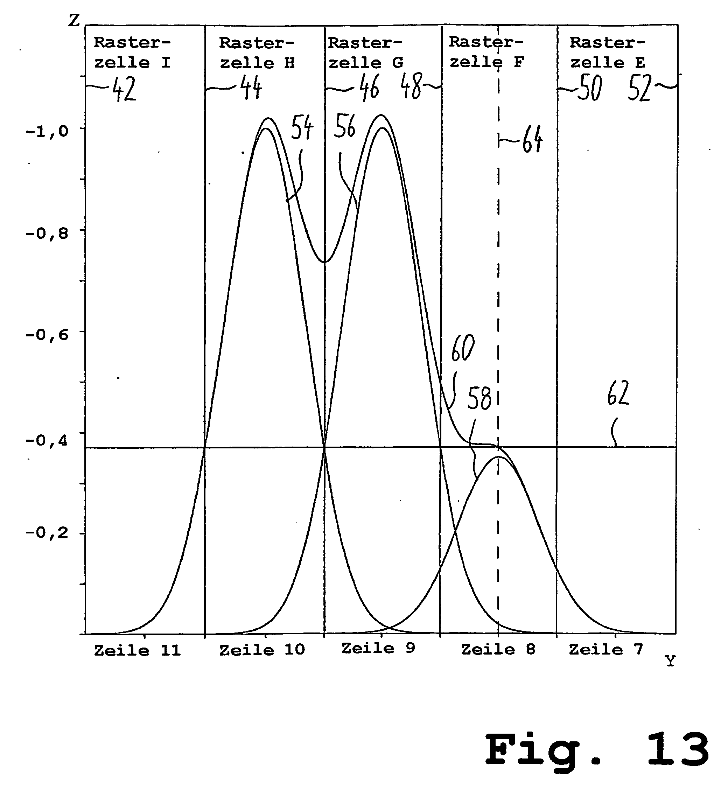

In Figur 13 ist ein Diagramm dargestellt, das die Ladungsverteilung entlang der in Figur 12 eingezeichneten Strichlinie 40 auf der Fotoleiterschicht nach dem Belichten mit Hilfe der Lichtquelle für die Zeilen Z7 bis Z11 zeigt. Die Rasterzellen benachbarter Zeilen Z7, Z8, Z9, Z10, Z11 sind durch senkrechte Volllinien dargestellt, die mit 42 bis 52 bezeichnet sind. Die Rasterzelle der Zeile Z7, durch die die Strichlinie 40 verläuft, wird im Folgenden mit E, die Rasterzelle der Zeile Z8 mit F, die Rasterzelle der Zeile Z9 mit G, die Rasterzelle der Zeile Z10 mit H und die Rasterzelle der Zeile Z11 mit I bezeichnet. Auf der Abszisse Y ist die Position der Rasterzellen entlang der Strichlinie 40 angetragen und auf der Ordinate Z das Potential bzw. die Ladung der Fotoleiterschicht.

Mit Hilfe der Lichtquelle wird der Rasterzelle H eine erste Lichtmenge zugeführt, wodurch diese Rasterzelle H entsprechend dem Graphen 54 entladen wird. Die waagrechte Volllinie, die mit 62 bezeichnet ist, gibt die Entwicklungsschwelle an. Der Graph 54 schneidet die Entwicklungsschwelle 62 an den Grenzen der Rasterzelle H zu den Rasterzellen I und G. Dadurch ist die Rasterzelle H so stark entladen, dass die gesamte Rasterzelle H beim Entwickeln der Fotoleiterschicht mit Toner eingefärbt wird.

Ein Teil der Lichtmenge wird beim Belichten der Rasterzelle H der Rasterzelle I und der Rasterzelle G zugeführt. Die Rasterzellen I und G werden durch diese Lichtmenge nur relativ gering entladen. Die Rasterzelle I wird nur so gering entladen, dass beim nachfolgenden Entwickeln der Fotoleiterschicht mit Toner kein Bereich der Rasterzelle I mit Toner eingefärbt wird. Der Rasterzelle G wird durch die Lichtquelle die gleiche Lichtmenge zugeführt, wie der Rasterzelle H. Dadurch wird die Rasterzelle G entsprechend dem Graphen 56 entladen. Ebenso wie bei der Rasterzelle H wird beim Belichten der Rasterzelle G ein Teil des Lichtes auf die benachbarten Rasterzellen abgegeben, wodurch Bereiche dieser Rasterzellen je nach Lichtintensität weiter entladen werden.

Der Rasterzelle F wird mit Hilfe der Lichtquelle etwa die 0,7-fache Lichtmenge zugeführt, die der Rasterzelle H und G jeweils zugeführt worden ist. Die Rasterzelle F wird durch diese zugeführte Lichtmenge entsprechend dem Graphen 58 entladen, wobei ein Teil dieser Lichtmenge ähnlich wie beim Belichten der Rasterzellen H und G auf die benachbarten Rasterzellen abgegeben wird. Dadurch werden zumindest Bereiche von benachbarten Rasterzellen F, G, H nicht nur durch die Lichtmenge entladen, die dieser Rasterzelle durch die Lichtquelle zugeführt wird, sondern auch durch den Teil der Lichtmenge, der beim Belichten der benachbarten Rasterzelle auf diese Rasterzelle abgegeben wird.

Nach dem Belichten der Rasterzellen F, G und H ergibt sich eine Gesamtentladungskurve, die durch den Graphen 60 dargestellt ist. Der Graph 60 ist der Summengraph der Graphen 54, 56, 58. Der Graph 60 schneidet die Entwicklungsstelle 62 etwa nach der halben Rasterzelle F. Beim nachfolgenden Entwickeln der Fotoleiterschicht mit Toner werden, wie bereits erwähnt, nur die Bereiche mit Toner eingefärbt, die unterhalb der Entwicklungsschwelle 62 entladen worden sind. Somit wird der Bereich zwischen der Linie 44 und der Strichlinie 64 mit Toner eingefärbt, wobei dieser Bereich etwa einer Breite von 2,5 Rasterzellen entspricht.

Beim Belichten der Rasterflächen der Rasterzellen F, G, H wird selbstverständlich auch ein Teil der Lichtmenge auf benachbarte Rasterzellen der jeweils gleichen Zeile Z8, Z9, Z10 abgegeben. Werden alle Rasterzellen der Zeilen Z8, Z9, Z10 in gleicher Weise belichtet, wie die Rasterzellen F, G, H, so ergibt sich nach dem Entwickeln mit Toner ein eingefärbter Bereich, der der Darstellung des Ziel-Druckbildes 36 nach Figur 12 entspricht. Dadurch wird eine Linie erzeugt, die eine Breite von etwa 2,5 Rasterzellen hat und, wie bereits erwähnt, einer Linienbreite des Quell-Druckbildes 32 nach Figur 10 entspricht.

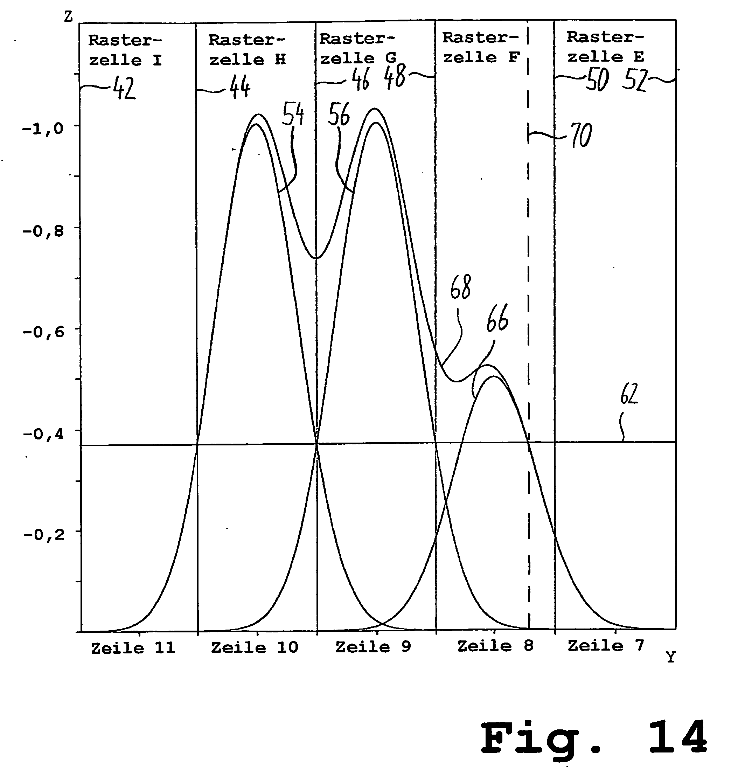

In Figur 14 ist ein Diagramm ähnlich dem Diagramm nach Figur 13 dargestellt. Gleiche Elemente tragen gleiche Bezugszeichen. Im Unterschied zu Figur 13 wird der Rasterzelle F der Zeile Z8 etwa die 0,85-fache Lichtmenge zugeführt, die den Rasterzellen G und H zugeführt worden ist. Die Rasterzelle F wird dadurch entsprechend dem Graphen 66 entladen. Die den Rasterzellen F, G, H zugeführten Lichtmengen überlagern sich in gleicher Weise, wie bereits in Zusammenhang mit Figur 13 beschrieben. Dadurch ergibt sich für die Gesamtentladung der Rasterzellen E bis I ein Verlauf entsprechend dem Graphen 68. Der Graph 68 ist der Summengraph der Graphen 54, 56, 66. Im Unterschied zur Figur 13 wird nach dem Diagramm der Figur 14 ein größerer Bereich der Rasterzelle F unterhalb der Entwicklungsschwelle 62 entladen. Dadurch wird beim anschließenden Entwickeln mit Toner ein größerer Bereich der der Rasterzelle F auf der Fotoleiterschicht zugeordneten Fläche mit Toner eingefärbt. Dieser Bereich erstreckt sich von der Linie 44 bis zur Strichlinie 70, wodurch etwa eine Breite von 2,8 Rasterzellen eingefärbt wird. Dadurch lässt sich die Linienbreite der zu druckenden Linie nach Figur 12 auf 2,8 Rasterzellen vergrößern.

Wird der Rasterzelle F jedoch eine geringere Lichtmenge zugeführt, z.B. die 0,6-fache Lichtmenge, die den Rasterzellen G und H zugeführt wird, lässt sich die Linienbreite auf etwa 2,2 Rasterzellen reduzieren. Durch Verändern der zugeführten Lichtmenge lässt sich auch nahezu jede andere beliebige Linienbreite erzeugen.

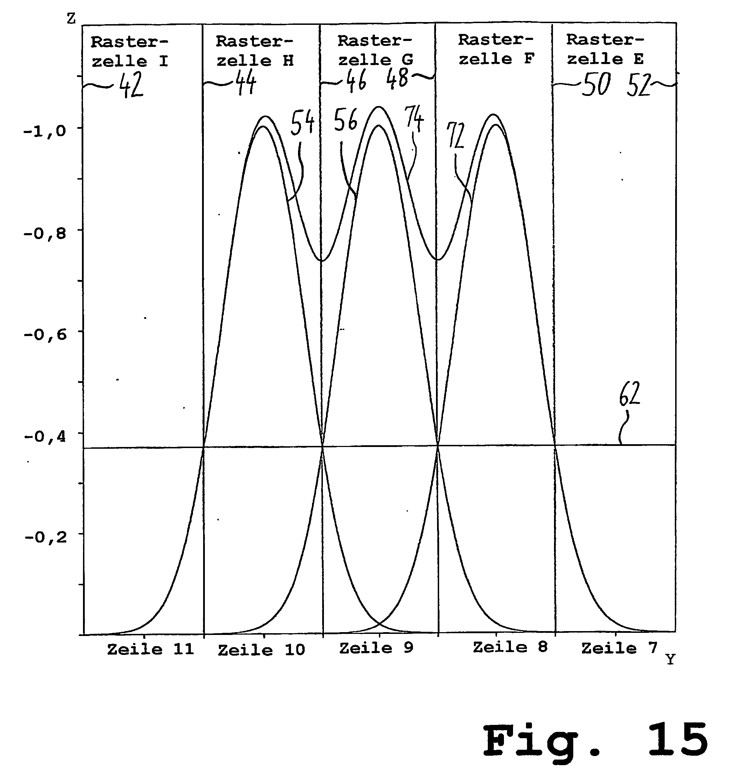

In Figur 15 ist ein Diagramm ähnlich den Diagrammen nach Figur 13 und 14 dargestellt. Jedoch wird der Rasterzelle F die gleiche Lichtmenge zugeführt, wie den Rasterzellen G und H. Dadurch wird die Rasterzelle F ebenso entladen wie die Rasterzellen G und H. Die Entladung der Rasterzelle F ist in Figur 15 durch den Graphen 72 dargestellt. Die Gesamtentladung der Rasterzellen E, F, G, H, I ergibt sich aus dem Summengraphen 74 der Graphen 54, 56, 72. Die Rasterzellen F, G, H werden derart entladen, dass alle Bereiche der zu den Rasterzellen F, G, H zugeordneten Rasterflächen der Fotoleiterschicht unterhalb der Entwicklungsschwelle 62 entladen sind. Beim anschließenden Entwickeln mit Toner werden diese Rasterzellen somit vollständig mit Toner eingefärbt, wodurch sich eine Linienbreite von drei Rasterzellen ergibt.

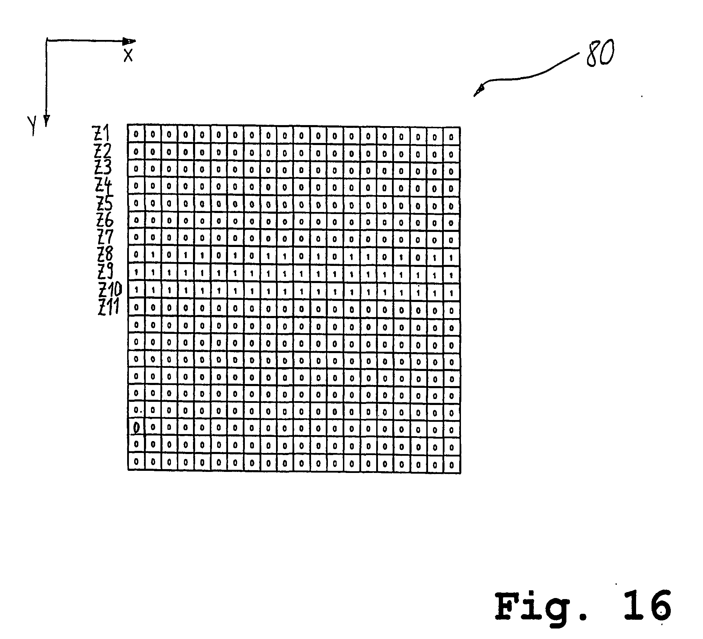

In Figur 16 ist eine Matrix 80 mit Ziel-Druckdaten dargestellt, wobei die Zellen der Matrix 80 Rasterzellen eines Ziel-Bildes entsprechen. Die Matrix 80 stimmt mit der Matrix 34 nach Figur 11 überein, wobei jedoch die in der Matrix 80 enthaltenen Druckdaten nur eine Wortlänge von 1 Bit haben. Die Lichtquellen werden mit Hilfe der Ziel-Druckdaten nur mit Hilfe von zwei Signalzuständen angesteuert, so dass sie eine vorgegebene Lichtmenge auf die zugeordnete Rasterfläche der Fotoleiterschicht beim logischen Signalzustand 1 abgeben und beim logischen Signalzustand 0 kein Licht auf die zugeordnete Rasterfläche abgeben. Die Ziel-Bilddaten der Matrix 80 wurden mit dem aus dem Dokument WO 98/43207 bekannten Verfahren aus den Quell-Bilddaten nach Figur 10 erzeugt. Die Ziel-Bilddaten nach Figur 16 wurden ebenfalls mit einem Boolschen Schaltnetz 30 erzeugt. Die Ziel-Bilddaten der Zeilen Z9 und Z10 haben den Signalzustand 1, wodurch die Ziel-Bildelemente des Ziel-Bildes als schwarze Flächen darzustellen sind. Die Ziel-Bilddaten der Ziel-Bildelemente der Zeile Z8 enthalten entsprechend einem voreingestellten Schema abwechselnd die Signalzustände 0 und 1, wobei auch mehrere gleiche Signalzustände aufeinander folgen können. Die Gesamtfläche der durch die Ziel-Bildelemente der Zeile Z8 eingefärbten Fläche entspricht etwa der halben Fläche aller Rasterzellen der Zeile Z8.

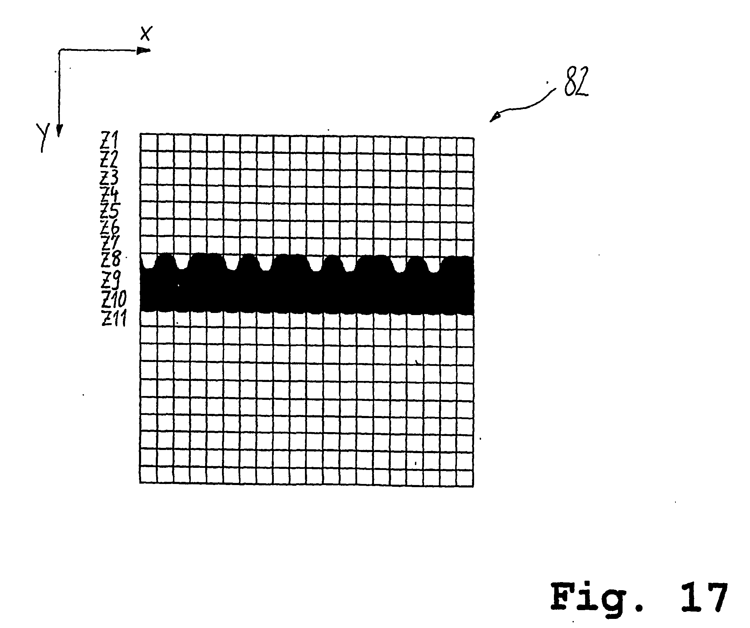

In Figur 17 ist ein stark vergrößertes Ziel-Druckbild 82 dargestellt, das mit Hilfe der Druckdaten nach Figur 16 erzeugt worden ist. Die durch die Ziel-Bildelemente des Ziel-Druckbildes 82 eingefärbte Fläche entspricht etwa der durch die Quell-Bildelemente nach Figur 10 eingefärbten Fläche. Dadurch wird im Ziel-Druckbild 82 etwa die gleiche Linie dargestellt, wie im Quell-Druckbild 10. Das bekannte Verfahren zum Erzeugen eines Druckbildes nach den Figuren 16 und 17 führt bei einer Umsetzung des Quell-Bildes 32 zu einem Ziel-Druckbild 82, wodurch ein optisch mit dem Quell-Druckbild 32 nicht exakt übereinstimmendes Ziel-Druckbild 82 erzeugt wird. Durch das in Zusammenhang mit den Figuren 11 bis 15 beschriebene erfindungsgemäße Verfahren wird jedoch ein Ziel-Druckbild 36 erzeugt, das optisch exakt mit dem Quell-Druckbild 32 übereinstimmt. Dadurch lassen sich mit einem Drucksystem mit einer Auflösung von z.B. 600 dpi auch Druckbilder exakt wiedergeben, die für Drucksysteme mit einer Auflösung von 240 dpi oder 400 dpi erzeugt worden sind.

Durch das erfindungsgemäße Verfahren lassen sich, wie in Zusammenhang mit den Figuren 13 bis 15 beschrieben, nahezu beliebig breite Linien erzeugen. Bei drucksystembedingten unterschiedlichen Wiedergaben von horizontalen und vertikalen Linien kann die Linienbreite mit dem erfindungsgemäßen Verfahren einfach auf eine einheitliche Linienbreite angepasst werden. Auch kann die Linienbreite unterschiedlicher Drucksysteme mit Hilfe des erfindungsgemäßen Verfahrens derart aufeinander abgestimmt werden, dass alle Drucksysteme bei gleichen Druckdaten identische Druckbilder erzeugen.

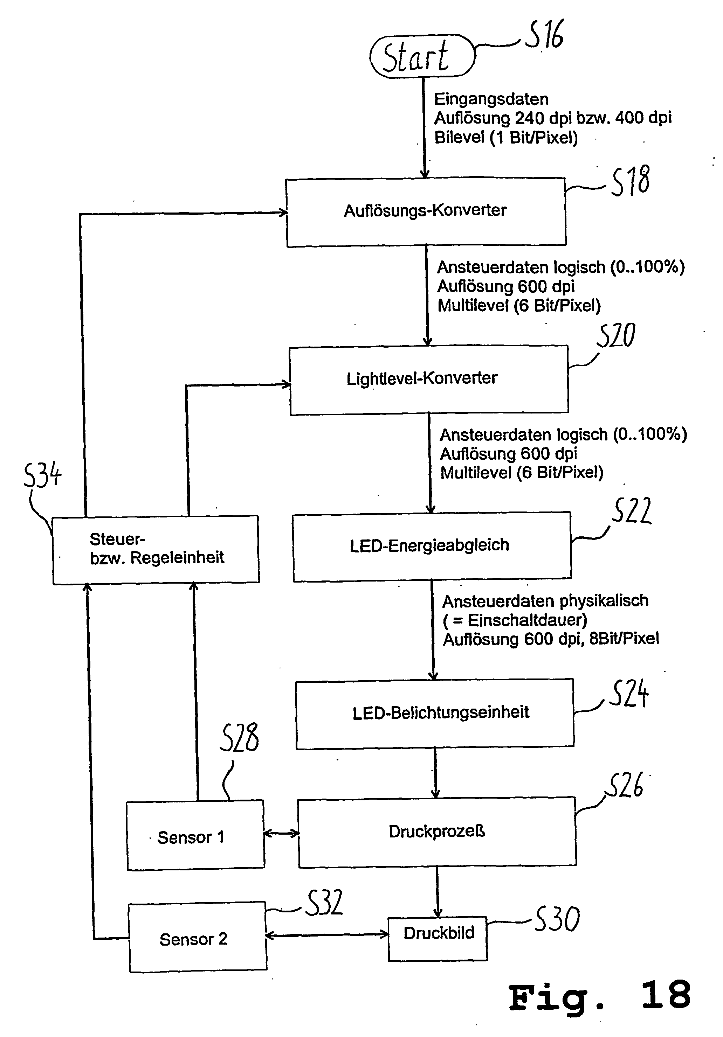

In Figur 18 ist ein Ablaufplan zur Regelung der Linienbreite eines Drucksystems dargestellt. Der Ablauf zur Regelung der Linienbreite beginnt im Schritt S16. Zusätzlich zur Regelung der Linienbreite werden die Quell-Druckdaten zum Erzeugen eines Quell-Druckbildes mit einer Auflösung von 240 dpi in Ziel-Druckdaten eines Ziel-Druckbildes mit einer Auflösung von 600 dpi im Schritt S18 gewandelt. Dazu wird das bereits beschriebene erfindungsgemäße Verfahren zum Umwandeln von Quell-Druckdaten in Ziel-Druckdaten genutzt. Die Quell-Druckdaten haben wie beschrieben eine Wortlänge von 1 Bit, wobei die Ziel-Druckdaten für jedes Ziel-Bildelement eine Wortlänge von 6 Bit haben. Anschließend werden im Schritt S20 aus den Ziel-Druckdaten Ansteuerdaten zur Ansteuerung des Zeichengenerators bzw. der Lichtquelle erzeugt. Enthalten z.B. die Ziel-Druckdaten einen Wert, nach dem die Fläche eines Ziel-Bildelementes zur Hälfte mit Toner eingefärbt werden soll, so muss, wie bereits in Zusammenhang mit Figur 11 beschrieben, die Lichtquelle des Drucksystems im Ausführungsbeispiel die 0,7-fache Lichtmenge der Lichtmenge abgeben, die zum vollständigen Einfärben der Rasterfläche des Ziel-Bildelementes notwendig ist.

Die Ansteuerdaten werden dann einer Ansteuereinheit zum Ansteuern der Lichtquelle zugeführt. In Schritt S22 wird nachfolgend aus den Ansteuerdaten die Einschaltzeit für jede Lichtquelle ermittelt. Im Schritt 22 werden dabei Daten entsprechend der ermittelten Einschaltzeit für jedes Ziel-Bildelement erzeugt, die eine Wortlänge von 8 Bit je Ziel-Bildelement haben. Mit Hilfe der ermittelten Einschaltzeit wird im Schritt S24 die LED-Belichtungseinheit des Zeichengenerators angesteuert. Zu den Ziel-Bildelementen gehörende Rasterflächen der Fotoleiterschicht werden mit Hilfe der von der LED-Belichtungseinheit abgegebenen Lichtmenge belichtet. Eine solche LED-Belichtungseinheit kann z.B. alle Rasterzellen einer Zeile gleichzeitig belichten.

Im Schritt S26 werden die durch die LED-Belichtungseinheit entladenen Bereiche der Fotoleiterschicht mit Toner eingefärbt. Die Linienbreite von auf der Fotoleiterschicht erzeugten Linien wird mit Hilfe einer ersten Sensoranordnung im Schritt S28 erfasst, wobei der Wert der ermittelten Linienbreite einer Steuer- und Regeleinheit zugeführt wird. Das im Schritt S26 auf der Fotoleiterschicht erzeugte Druckbild wird im Schritt S30 auf ein Trägermaterial umgedruckt und fixiert.

Mit Hilfe einer zweiten Sensoranordnung wird im Schritt S32 die Linienbreite mindestens einer Linie des Druckbildes erfasst, wobei der Wert der Linienbreite der Steuer- und/oder Regeleinheit zugeführt wird. Im Schritt S34 wird mit Hilfe der Steuer- und/oder Regeleinheit entsprechend den Werten der ersten und/oder zweiten Sensoranordnung ermittelten Linienbreite mindestens ein Korrekturwert erzeugt. Dieser Korrekturwert wird beim Umwandeln nachfolgender Quell-Druckdaten der Quell-Druckbilder in Ziel-Druckdaten der Ziel-Druckbilder im Schritt S18 genutzt. Gleichzeitig oder alternativ kann der Korrekturwert auch beim Umwandeln der Ziel-Druckdaten in Ansteuerdaten im Schritt S20 genutzt werden.

Die mit Hilfe des Ablaufplans nach Figur 18 beschriebene Regelung kann auch zum Regeln der Linienbreite von Druckbildern genutzt werden, deren Druckdaten bereits zum Erzeugen von Druckbildern mit einer Auflösung von 600 dpi vorliegen. Dann entfällt der Schritt S18 zur Umwandlung der Quell-Bilddaten in Ziel-Bilddaten. Die Korrektur der Linienbreite erfolgt dann nur im Schritt S20. Durch das erfindungsgemäße Verfahren lassen sich nahezu beliebige Linienbreiten erzeugen. Die in Zusammenhang mit den Figuren 1 bis 18 beschriebenen Ausführungsbeispiele beziehen sich auf ein Drucksystem, bei dem einzufärbende Flächen entladen werden.

Die Lichtverteilungskurve der Lichtquelle entspricht bei anderen Ausführungsbeispielen, z.B. durch eine andere Optik, nicht einer Gaußkurve. Die Entladungskurven 54, 56, 58, 66, 72, 60, 68, 74 haben dann einen von den Graphen nach Fig. 13 bis 15 abweichenden Verlauf, was jedoch auf das erfindungsgemäße Verfahren keinen Einfluss hat. Die den Rasterzellen zugeführte Lichtmenge muss bei diesen Ausführungsbeispielen gegebenenfalls angepasst werden. Auch ist das erfindungsgemäße Verfahren nicht auf Quell-Druckdaten mit einer Auflösung von 240 dpi und 400 dpi sowie auf Ziel-Druckdaten mit einer Auflösung von 600 dpi beschränkt. Es lassen sich mit Hilfe des erfindungsgemäßen Verfahrens vielmehr Quell-Druckdaten von Quell-Druckbildern mit einer beliebigen ersten Auflösung Ziel-Druckdaten von Ziel-Druckdaten mit einer beliebigen zweiten Auflösung erzeugen.

### Bezugszeichenliste

- 10, 10a: Quell-Druckbild
- 12: Quell-Teildruckbild
- A, B, C, D: Quell-Bildelemente
- X, Y: Koordinaten
- a1 bis e5: Ziel-Bildelemente
- 14: Ziel-Bild
- 16: Ziel-Teilbild
- 20: Boolsches Schaltnetz
- 22, 22a: Quell-Bild
- 24: Quell-Teilbild
- 26: Ziel-Bild
- 28: Ziel-Teilbild
- 30: Boolsches Schaltnetz
- 32: Quell-Bild
- 34: Ziel-Bildmatrix
- Z1 bis Z10: Zeilen
- 36: Ziel-Bild
- 38: eingefärbte Fläche
- 40: Schnittlinie
- 42 bis 52: Randlinien
- 54, 56, 58, 66, 72: Entladungskurven
- 60, 68, 74: Summenentladungskurven
- 62: Entwicklungsschwelle
- S10 bis S34: Ablaufschritte
- Z: Ladung

## Patentansprüche

1. Elektrofotografisches Verfahren zum Erzeugen eines Druckbildes,
bei dem eine zu erzeugende Linie eines Druckbildes Bildelemente (a1 bis b3) enthält, die matrixförmigen Rasterzellen (E bis I) zugeordnet sind,
mindestens ein erstes Bildelement (a1) und ein zweites Bildelement (b1) aneinandergrenzender Rasterzellen (G, F) die Breite der Linie festlegen,
entsprechend jedem Bildelement (a1, b1) zugeordneten Daten durch eine mit Hilfe mindestens einer Lichtquelle ausgesendete Lichtmenge die Ladung einer dem jeweiligen Bildelement zugeordnete Rasterfläche einer lichtempfindlichen Fotoleiterschicht geändert wird,
wobei die Lichtquelle entsprechend ihrer Lichtverteilungskurve auch einen Teil der Lichtmenge zumindest auf an die Rasterfläche angrenzende Teilbereiche benachbarter Rasterzellen (G, F) abgibt,
der dem ersten Bildelement (a1) zugeordneten ersten Rasterfläche eine erste Lichtmenge zugeführt wird, die die erste Rasterfläche unterhalb einer Entwicklungsschwelle (62) entlädt oder die die erste Rasterfläche derart auflädt, dass die Ladung der ersten Rasterfläche oberhalb der Entwicklungsschwelle (62) liegt,
der dem zweiten Bildelement zugeordneten zweiten Rasterfläche (b1) eine gegenüber der ersten Lichtmenge kleinere zweite Lichtmenge zugeführt wird, so dass
durch die zweite Lichtmenge und durch den Teil der ersten Lichtmenge, der auf die zweite Rasterfläche auftrifft, ein an die erste Rasterfläche angrenzender Teilbereich der zweiten Rasterfläche unterhalb der Entwicklungsschwelle (62) entladen wird bzw. dass durch die zweite Lichtmenge und durch den Teil der ersten Lichtmenge, der auf die zweite Rasterfläche auftrifft, ein an die erste Rasterfläche angrenzender Teilbereich der zweiten Rasterfläche derart aufgeladen wird, dass die Ladung dieses Teilbereichs oberhalb der Entwicklungsschwelle liegt,
und wobei die Breite der zu erzeugenden Linie zumindest durch die erste Rasterfläche und den an die erste Rasterfläche angrenzender Teilbereich der zweiten Rasterfläche festgelegt ist.

2. Verfahren nach Anspruch 1, **dadurch gekennzeichnet, dass** die Fotoleiterschicht auf ein eingestelltes erstes Potential elektrisch geladen wird, und dass
die zweite Lichtmenge kleiner ist als die erste Lichtmenge,
wobei durch die erste Lichtmenge die erste Rasterfläche (G) unterhalb eines zweiten Potentials (62) entladen wird, und
wobei durch die zweite Lichtmenge und durch den Teil der ersten Lichtmenge, der auf die zweite Rasterfläche (F) auftrifft, ein an die erste Rasterfläche (G) angrenzender Bereich der zweiten Rasterfläche (F) unterhalb des zweiten Potentials entladen wird.

3. Verfahren nach Anspruch 2, **dadurch gekennzeichnet,**
**dass** die Lichtquellen in mindestens drei Stufen ansteuerbar sind, wobei die Rasterfläche (E bis I) in einer ersten Stufe nicht, in einer zweiten Stufe teilweise und in einer dritten Stufe nahezu vollständig auf ein voreingestelltes Potential (Z) entladen wird.

4. Verfahren nach Anspruch 1, **dadurch gekennzeichnet, dass** die Fotoleiterschicht ein Bezugspotential hat, und dass
die zweite Lichtmenge kleiner ist als die erste Lichtmenge,
wobei durch die erste Lichtmenge die erste Rasterfläche (G) derart aufgeladen wird, dass die Ladung des Bereichs oberhalb eines zweiten Potentials (62) liegt, und
wobei durch die zweite Lichtmenge und durch den Teil der ersten Lichtmenge, der auf die zweite Rasterfläche (F)auftrifft, ein an die erste Rasterfläche (G) angrenzender Bereich der zweiten Rasterfläche (F) derart aufgeladen wird, dass die Ladung des Bereichs oberhalb des zweiten Potentials (62) liegt.

5. Verfahren nach Anspruch 4, **dadurch gekennzeichnet,**
**dass** die Lichtquellen in mindestens drei Stufen ansteuerbar sind, wobei die Rasterfläche (E bis I) in einer ersten Stufe nicht, in einer zweiten Stufe teilweise und in einer dritten Stufe nahezu auf ein voreingestelltes Potential (Z) geladen wird.

6. Verfahren nach einem der Ansprüche 2 bis 5, **dadurch gekennzeichnet, dass** das zweite Potential eine Entwicklungsschwelle bei der Entwicklung des Ladungsbildes der Fotoleiterschicht mit Toner bildet.

7. Verfahren nach einem der vorhergehenden Ansprüche, **dadurch gekennzeichnet, dass** die erzeugte Linie die Randlinie eines mit Toner nicht einzufärbenden Bereichs ist, wobei die Rasterflächen (E bis I) von Bildelementen (a1, b1) belichtet werden, die mit Toner nicht einzufärben sind und das zweite Bildelement (b1) am äußeren Rand des nicht einzufärbenden Bereichs angeordnet ist.

8. Verfahren nach einem der Ansprüche 1 bis 6, **dadurch gekennzeichnet, dass** die erzeugte Linie die Randlinie eines mit Toner einzufärbenden Bereichs ist, wobei die Rasterflächen (E bis I) von Bildelementen (a1, b1) belichtet werden, die mit Toner einzufärben sind und das zweite Bildelement (b1) am äußeren Rand des einzufärbenden Bereichs angeordnet ist.

9. Verfahren nach einem der vorhergehenden Ansprüche,
**dadurch gekennzeichnet, dass** die entladenen Bereiche entladene Rasterflächen und entladene Teile von Rasterflächen umfassen, und dass die geladenen Bereiche geladene Rasterflächen und geladenen Teile von Rasterflächen umfassen.

10. Verfahren nach einem der vorhergehenden Ansprüche,
**dadurch gekennzeichnet, dass** Quell-Bilddaten eines Quell-Bildes (32), dessen Quell-Bildelemente (A, B, C, D) mit einer vorgegebenen ersten Auflösung (400 dpi) entsprechend einem Quell-Bildraster angeordnet sind, in Ziel-Bilddaten eines Ziel-Bildes (3c) umgewandelt werden, dessen Ziel-Bildelemente (a1 bis c3) mit einer von der ersten Auflösung (400 dpi) abweichende, um einen Umsetzungsfaktor (1, 5) verschiedene zweite Auflösung (600 dpi) entsprechend einem Ziel-Bildraster angeordnet werden.

11. Verfahren nach Anspruch 10, **dadurch gekennzeichnet, dass** das Quell-Bild (22) in matrixförmige Teilbilder (24) unterteilt wird, und dass
für jedes Quell-Teilbild (24) aus den Quell-Bilddaten ein zugehöriges Ziel-Teilbild (28) nach für alle Teilbilder (24, 28) gleichen Rechenoperationen ermittelt wird, wobei das Ziel-Teilbild (28) an einer Position im Ziel-Bild (26) angeordnet wird, die mit der Position des zugehörigen Quell-Teilbildes (24) im Quell-Bild (22) übereinstimmt.

12. Verfahren nach Anspruch 10 oder 11, **dadurch gekennzeichnet, dass** das Erzeugen der Ziel-Bilddaten mit Hilfe der Quell-Bilddaten für Ziel-Bildelemente Hilfe der Quell-Bilddaten für Ziel-Bildelemente (a2, b2, c2, b1), deren Rasterflächenbereich im Quell-Bild (22) Teilbereiche von mindestens zwei Quell-Bildelementen (A, B) enthält, entsprechend der Quell-Bilddaten und der Flächenanteile der Quell-Bildelemente (A, B) am Ziel-Bildelement (a2, b2, c2, b1) erfolgt.

13. Verfahren nach Anspruch 11 oder 12, **dadurch gekennzeichnet, dass** das jedes Quell-Teilbild (24) vier Quell-Bildelemente (A, B, C, D) enthält.

14. Verfahren nach einem der Ansprüche 10 bis 13, **dadurch gekennzeichnet, dass** der Umsetzungsfaktor den Wert 1,5 hat, wobei die erste Auflösung 400 dpi beträgt und die zweite Auflösung 600 dpi.

15. Verfahren nach einem der Ansprüche 10 bis 13, **dadurch gekennzeichnet, dass** der Umsetzungsfaktor den Wert 2,5 hat, wobei die erste Auflösung 240 dpi beträgt und die zweite Auflösung 600 dpi.

16. Verfahren nach einem der Ansprüche 10 bis 15, **dadurch gekennzeichnet, dass** die Quell-Bilddaten eines Quell-Bildelementes (A, B, C, D) eine Wortlänge von einem Bit haben, und dass die Ziel-Bilddaten eines Ziel-Bildelementes (a1 bis c3) mit einer Wortlänge von mindestens zwei Bit erzeugt werden.

17. Verfahren nach einem der Ansprüche 10 bis 16, **dadurch gekennzeichnet, dass** die Umwandlung der Quell-Bilddaten in Ziel-Bilddaten durch eine festverdrahtete Logik und/oder durch ein Programmmodul erfolgt, dessen Befehle durch eine Datenverarbeitungsanlage abgearbeitet werden.

18. Verfahren nach einem der vorhergehenden Ansprüche,
**dadurch gekennzeichnet, dass** die Lichtquelle in 64 Stufen angesteuert wird, wobei die Lichtquelle bei jeder Stufe eine andere Lichtmenge abgibt.

19. Verfahren nach einem der vorhergehenden Ansprüche,
**dadurch gekennzeichnet, dass** Lichtmenge durch die Intensität und/oder Einschaltdauer der Lichtquelle gesteuert wird.

20. Verfahren nach einem der vorhergehenden Ansprüche,
**dadurch gekennzeichnet, dass** die Linienbreite einer im Druckbild enthaltenen Linie durch das Bilden unterschiedlich großer geladener und entladener Bereiche auf der Fotoleiterschicht geändert wird.

21. Verfahren nach Anspruch 20, **dadurch gekennzeichnet,**
**dass** die Linienbreite gedruckter Linien durch eine Sensoranordnung ermittelt wird, dass ein Vergleich der ermittelte Linienbreite mit einer vorgegebenen Linienbreite durchgeführt wird, und dass die geladenen und entladenen Bereiche nachfolgender Druckbilder entsprechend dem Vergleichsergebnis angepasst werden.

22. Verfahren nach Anspruch 20 oder 21, **dadurch**
**gekennzeichnet, dass** die Linienbreite von in Förderrichtung des Trägermaterials verlaufenden Linien, von quer zur Förderrichtung verlaufenden Linien und/oder von schräg zur Förderrichtung verlaufenden Linien erfasst werden, wobei die Linienbreite nachfolgend zu druckender Linien derart angepasst wird, dass Linien mit einer einheitlichen Linienbreite erzeugt werden.

23. Verfahren nach einem der vorhergehenden Ansprüche,
**dadurch gekennzeichnet, dass** Lichtquellen eines Zeichengenerators angesteuert werden.

24. Elektrofotografisches Drucksystem zum Erzeugen eines Druckbildes,
mit matrixförmigen Rasterzellen, denen Bildelemente (a1, b1) zugeordnet sind, durch die eine Linie eines Druckbildes erzeugt wird,
wobei mindestens ein erstes Bildelement (a1) und ein zweites Bildelement (a2) aneinandergrenzender Rasterzellen die Breite der Linie festlegen,
mit einer Lichtquelle, die entsprechend jedem Bildelement zugeordneten Daten eine Lichtmenge aussendet, wodurch die Ladung einer dem jeweiligen Bildelement zugeordnete Rasterfläche einer lichtempfindlichen Fotoleiterschicht geändert wird,
wobei die Lichtquelle entsprechend ihrer Lichtverteilungskurve auch einen Teil der Lichtmenge zumindest auf an die Rasterfläche angrenzende Teilbereiche benachbarter Rasterflächen abgibt,
die Lichtquelle der dem ersten Bildelement (a1) zugeordneten ersten Rasterfläche eine erste Lichtmenge zuführt, die die erste Rasterfläche unterhalb einer Entwicklungsschwelle (62) entlädt oder die die erste Rasterfläche derart auflädt, dass die Ladung der ersten Rasterfläche oberhalb der Entwicklungsschwelle (62) liegt,
die Lichtquelle der dem zweiten Bildelement (b1) zugeordneten zweiten Rasterfläche eine gegenüber der ersten Lichtmenge kleinere zweite Lichtmenge zuführt, so dass durch die zweite Lichtmenge und durch den Teil der ersten Lichtmenge, der auf die zweite Rasterfläche auftrifft, ein an die erste Rasterfläche angrenzender Teilbereich der zweiten Rasterfläche unterhalb der Entwicklungsschwelle (62) entladen wird bzw. dass durch die zweite Lichtmenge und durch den Teil der ersten Lichtmenge, der auf die zweite Rasterfläche auftrifft, ein an die erste Rasterfläche angrenzender Teilbereich der zweiten Rasterfläche derart aufgeladen wird, dass die Ladung dieses Teilbereichs oberhalb der Entwicklungsschwelle (62) liegt,
und wobei die Breite der zu erzeugenden Linie zumindest durch die erste Rasterfläche und den an die erste Rasterfläche angrenzender Bereich der zweiten Rasterfläche festlegbar ist.

25. Datenverarbeitungssystem zum Umwandeln von Druckdaten,
mit einer Recheneinheit, die Quell-Bilddaten eines Quell-Bildes (32), dessen Quell-Bildelemente (A, B, C, D) mit einer vorgegebenen ersten Auflösung (400 dpi) entsprechend einem ersten Quell-Bildraster angeordnet sind, in Ziel-Bilddaten eines Ziel-Bildes (38) umwandelt, dessen Ziel-Bildelemente (a1 bis c3) mit einer von der ersten Auflösung, um einen Umsetzungsfaktor (1,5) verschiedenen zweiten Auflösung (600 dpi) entsprechend einem Ziel-Bildraster angeordnet sind, wobei die Quell-Bilddaten eine Wortlänge von einem Bit haben, **dadurch gekennzeichnet, dass**
mindestens ein erstes Ziel-Bildelement (a1) und ein zum ersten Ziel-Bildelement (a1) benachbartes zweites Ziel-Bildelement (b1) die Breite einer zu erzeugenden Linie festlegen,
die Recheneinheit Ziel-Bilddaten mit einer Wortlänge von mindestens zwei Bit erzeugt,
und dass mit diesen Ziel-Bilddaten eine Lichtquelle zum Belichten einer Fotoleiterschicht derart ansteuerbar ist, dass die Verfahrensschritte nach einem der Ansprüche 1 bis 23 durchführbar sind.

26. Computersoftware, umfassend Befehle und Daten in codierter Form, die nach dem Laden der Computersoftware ein Computersystem veranlassen, die in einem der Ansprüche 1 bis 23 genannten Schritte auszuführen.

## Claims

1. Electrophotographic method to generate a print image,
in which a line of a print image to be generated contains image elements (a1 to b3) that are allocated to matrix-shaped raster cells (E to I),
at least one first image element (a1) and a second image element (b1) of adjoining raster cells (G, F) establish the width of the line,
the charge of a raster surface of a light-sensitive photoconductor layer allocated to the respective image element is changed corresponding to data allocated to each image element (a1, b1) via a light quantity emitted with the aid of at least one light source,
wherein the light source, corresponding to its light distribution curve, also emits a portion of the light quantity at least on partial regions of adjacent raster cells (G, F) abutting the raster surface,
a first light quantity is supplied to the first raster surface allocated to the first image element (a1), which the first raster surface discharges below a development threshold (62) or which charges the first raster surface such that the charge of the first raster surface lies above the development threshold (62),
a second light quantity smaller than the first light quantity is supplied to the second raster surface (b1) allocated to the second image element, such that by the second light quantity and the amount of the first light quantity that impinges on the second raster surface, a partial region of the second raster surface abutting the first raster surface is discharged below the development threshold (62) or, respectively, that by the second light quantity and by the amount of the first light quantity that impinges on the second raster surface, a partial region of the second raster surface abutting the first raster surface is charged such that the charge of this partial region lies above the development threshold,
and wherein the width of the line to be generated is established at least by the first raster surface and the partial region of the second raster surface abutting the first raster surface.

2. The method according to claim 1, **characterized in that** the photoconductor layer is electrically charged to set first potential, and that
the second light quantity is smaller than the first light quantity,
wherein via the first light quantity the first raster surface (G) is discharged below a second potential (62), and
wherein a region of the second raster surface (F) abutting the first raster surface (G) is discharged below the second potential via the second light quantity and via the portion of the first light quantity that impinges on the second raster surface (F).

3. The method according to claim 2, **characterized in that** the light sources can be activated in at least three levels, wherein the raster surface (E to I) is not discharged to a preset potential (Z) in a first level, is partially discharged to a preset potential (Z) in a second level and is nearly completely discharged to a preset potential (Z) in a third level.

4. The method according to claim 1, **characterized in that** the photoconductor layer has a reference potential, and that
the second light quantity is smaller than the first light quantity,
wherein via the first light quantity the first raster surface (G) is charged such that the charge of the region lies above a second potential (62), and
wherein via the second light quantity and via the portion of the first light quantity that impinges on the second raster surface (F), a region of the second raster surface (F) abutting the first raster surface (G) is charged such that the charge of the region is above the second potential (62).

5. The method according to claim 4, **characterized in that** the light sources can be activated in at least three levels, wherein the raster surface (E to I) is not charged to a present potential (Z) in a first level, is partially charged to a preset potential (Z) in a second level and is nearly completely charged to a preset potential (Z) in a third level.

6. The method according to one of the claims 2 to 5, **characterized in that** the second potential forms a development threshold given the development of the charge image of the photoconductor layer with toner.

7. The method according to one of the preceding claims, **characterized in that** the generated line is the boundary line of a region not to be inked with toner,
wherein the raster surfaces (E to I) of image elements (a1, b1) that are not to be inked with toner are exposed, and the second image element (b1) is arranged on the outer edge of the region not to be inked.

8. The method according to one of the claims 1 to 6, **characterized in that** the generated line is the boundary line of a region to be inked with toner, wherein the raster surfaces (E to I) of image elements (a1, b1) that are to be inked with toner are exposed, and the second image element (b1) is arranged on the outer edge of the region to be inked.

9. The method according to one of the preceding claims, **characterized in that** the discharged regions comprise discharged raster surfaces and discharged parts of raster surfaces, and that the charged regions comprise charged raster surfaces and charged parts of raster surfaces.

10. The method according to one of the preceding claims, **characterized in that** source image data of a source image (32) whose source image elements (A, B, C, D) with a predetermined first resolution (400 dpi) are arranged corresponding to a source image raster, are converted into target image data of a target image (3c) whose target image elements (a1 to c3) are arranged corresponding to a target image raster with a second resolution (600 dpi) deviating from the first revolution (400 dpi) and differing by a conversion factor (1.5).

11. The method according to clam 10, **characterized in that** the source image (22) is divided into matrix-shaped partial images (24), and that for each partial source image (24) an associated partial target image (28) is determined from the source image data according to calculation operations identical for all partial images (24, 28), wherein the partial target image (28) is arranged at a position in the target image (26) that coincides with the position of the associated partial source image (24) in the source image (22).

12. The method according to claim 10 or 11, **characterized in that** the generation of the target image data takes place with the aid of the source image data for target image elements (a2, b2, c2, b1) whose raster surface region in the source image (22) contains partial regions of at least two source image elements (A, B), corresponding to the source image data and the surface proportions of the source image elements (A, B) at the target image element (a2, b2, c2, b1).

13. The method according to claim 11 or 12, **characterized in that** every partial source image (24) contains four source image elements (A, B, C, D).

14. The method according to one of the claims 10 to 13, **characterized in that** the conversion factor has the value 1.5, the first resolution being 400 dpi and the second resolution being 600 dpi.

15. The method according to one of the claims 10 to 13, **characterized in that** the conversion factor has the value 2.5, the first resolution being 240 dpi and the second resolution being 600 dpi.

16. The method according to one of the claims 10 to 15,**characterized in that** the source image data of a source image element (A, B, C, D) have a word length of one bit, and that the target image data of a target image element (a1 to c3) are generated with a word length of at least two bits.

17. The method according to one of the claims 10 to 16, **characterized in that** the conversion of the source image data into target image data takes place via a hard-wired logic and/or via a program module whose commands are executed by a data processing system.

18. The method according to one of the preceding claims, **characterized in that** the light source is activated in 64 levels, the light source emitting a different light quantity at each level.

19. The method according to one of the preceding claims, **characterized in that** the light quantity is controlled by the intensity and/or activation duration of the light source.

20. The method according to one of the preceding claims, **characterized in that** the line width of a line contained in the print image is changed via the formation of differently-sized charged and discharged regions on the photoconductor layer.

21. The method according to claim 20, **characterized in that** the line width of printed lines is determined via a sensor arrangement, that a comparison of the determined line width with a predetermined line width is implemented, and that the charged and discharged regions of subsequent print images are adapted corresponding to the comparison result.

22. The method according to claim 20 or 21, **characterized in that** the line width of lines running in the conveying direction of the carrier material, of lines running transverse to the conveying direction and/or of lines running at an angle to the conveying direction are detected, the line width of lines to be printed subsequently being adapted such that lines are generated with a uniform line width.

23. The method according to one of the preceding claims, **characterized in that** light sources of a character generator are activated.

24. Eletrophotographic printing system to generate a print image,
with matrix-shaped raster cells with which are associated image elements (a1, b1) via which a line of a print image is generated,
wherein at least a first image element (a1) and a second image element (a2) of adjoining raster cells establish the width of the line,
with a light source which corresponding to data associated with each image element emits a light quantity, whereby the charge of a raster surface of a light-sensitive photoconductor layer associated with the respective image element is changed,
wherein the light source, corresponding to its light distribution curve, also emits a portion of the light quantity at least on regions of adjacent raster surfaces abutting the raster surface,
the light source supplies to the first raster surface associated with the first image element (a1) a first light quantity which discharges the first raster surface below a development threshold (62) or which charges the first raster surface such that the charge of the first raster surface lies above the development threshold (62),
the light source supplies a second light quantity smaller than the first light quantity to the second raster surface associated with the second image element (b1), such that by the second light quantity and the amount of the first light quantity that impinges on the second raster surface, a partial region of the second raster surface abutting the first raster surface is discharged below the development threshold (62) or, respectively, that by the second light quantity and by the amount of the first light quantity that impinges on the second raster surface, a partial region of the second raster surface abutting the first raster surface is charged such that the charge of this partial region lies above the development threshold (62),
and wherein the width of the line to be generated can be established at least by the first raster surface and the region of the second raster surface abutting the first raster surface.

25. A data processing system to convert print data,
with an arithmetic unit that converts source image data of a source image (32) whose source image elements (A, B, C, D) with a predetermined first resolution (400 dpi) are arranged corresponding to a first source image raster into target image data of a target image (38) whose target image elements (a1 to c3) with a second resolution (600 dpi) different from the first resolution by a conversion factor (1.5) are arranged corresponding to a target image raster, the source image data having a word length of one bit, **characterized in that**
at least one first target image element (a1) and a second target image element (b1) adjacent to the first target image element (a1) establish the width of a line to be generated,
the arithmetic unit generates target image data with a word length of at least two bits,
and **in that** with this target image data a light source can be activated for the exposure of a photoconductor layer, such that the method steps according to one of the claims 1 to 23 can be carried out.

26. A computer software, comprising commands and data in encoded form that, after the loading of the computer software, prompt a computer system to execute the steps cited in the claims 1 to 23.

## Revendications

1. Procédé électrophotographique destiné à générer une image d'impression, dans lequel :
une ligne, à générer, d'une image d'impression contient des éléments d'image (a1 à b3) qui sont associés à des cellules de trame (E à I) disposées en matrice,
au moins un premier élément d'image (a1) et un deuxième élément d'image (b1) de cellules de trame adjacentes (G, F) déterminant la largeur de la ligne,
une quantité de lumière, émise par au moins une source lumineuse, modifie la charge d'une surface tramée, associée à l'élément d'image respectif, d'une couche photoconductrice photosensible en fonction de données associées à chaque élément d'image (a1, b1),
la source lumineuse délivrant également, en fonction de sa courbe de distribution de lumière, une partie de la quantité de lumière au moins à des zones partielles, adjacentes à la surface tramée, de cellules de trame voisines (G, F),
une première quantité de lumière, qui décharge la première surface tramée au-dessous d'un seuil de développement (62), ou charge la première surface tramée de telle sorte que la charge de la première surface tramée se trouve au-dessus du seuil de développement (62), étant amenée à la première surface tramée associée au premier élément d'image (a1),
une deuxième quantité de lumière, inférieure à la première quantité de lumière, étant amenée à la deuxième surface tramée associée au deuxième élément d'image (b1) de sorte que la deuxième quantité de lumière et la partie de la première quantité de lumière qui est incidente à la deuxième surface tramée déchargent une zone partielle, adjacente à la première surface tramée, de la deuxième surface tramée au-dessous du seuil de développement (62), ou de sorte que la deuxième quantité de lumière et la partie de la première quantité de lumière qui est incidente à la deuxième surface tramée chargent une zone partielle, adjacente à la première surface tramée, de la deuxième surface tramée de telle sorte que la charge de cette zone partielle se trouve au-dessus du seuil de développement,
et la largeur de la ligne à générer étant déterminée au moins par la première surface tramée et la zone partielle, adjacente à la première surface tramée, de la deuxième surface tramée.

2. Procédé selon la revendication 1, **caractérisé en ce que** la couche photoconductrice est chargée électriquement à un premier potentiel réglé, et **en ce que** la deuxième quantité de lumière est inférieure à la première quantité de lumière,
la première quantité de lumière déchargeant la première surface tramée (G) au-dessous d'un deuxième potentiel (62), et
la deuxième quantité de lumière et la partie de la première quantité de lumière qui est incidente à la deuxième surface tramée (F) déchargeant une zone partielle, adjacente à la première surface tramée (G), de la deuxième surface tramée (F) au-dessous du deuxième potentiel.

3. Procédé selon la revendication 2, **caractérisé en ce que** les sources lumineuses peuvent être commandées à au moins trois niveaux, la surface tramée (E à I) n'étant pas déchargée à un premier niveau, étant partiellement déchargée à un deuxième niveau, et étant à peu près totalement déchargée à un troisième niveau à un potentiel préréglé (Z).

4. Procédé selon la revendication 1, **caractérisé en ce que** la couche photoconductrice a un potentiel de référence, et **en ce que** la deuxième quantité de lumière est inférieure à la première quantité de lumière,
la première quantité de lumière chargeant la première surface tramée (G) de telle sorte que la charge de la zone se trouve au-dessus d'un deuxième potentiel (62), et
la deuxième quantité de lumière et la partie de la première quantité de lumière qui est incidente à la deuxième surface tramée (F) chargeant une zone, adjacente à la première surface tramée (G), de la deuxième surface tramée (F) de telle sorte que la charge de la zone se trouve au-dessus du deuxième potentiel (62).

5. Procédé selon la revendication 4, **caractérisé en ce que** les sources lumineuses peuvent être commandées à au moins trois niveaux, la surface tramée (E à I) n'étant pas chargée à un premier niveau, étant partiellement chargée à un deuxième niveau, et étant à peu près totalement chargée à un troisième niveau à un potentiel préréglé (Z).

6. Procédé selon l'une des revendications 2 à 5, **caractérisé en ce que** le deuxième potentiel forme un seuil de développement lors du développement de l'image latente de la couche photoconductrice avec du toner.

7. Procédé selon l'une des revendications précédentes, **caractérisé en ce que** la ligne générée est la ligne en bordure d'une zone région qui n'est pas à colorer avec du toner, les surfaces tramées (E à I) étant éclairées par des éléments d'image (a1, b1) qui ne sont pas à colorer avec du toner, et le deuxième élément d'image (b1) étant placé au niveau du bord extérieur de la zone qui n'est pas à colorer.

8. Procédé selon l'une des revendications 1 à 6, **caractérisé en ce que** la ligne générée est la ligne en bordure d'une zone à colorer avec du toner, les surfaces tramées (E à I) étant éclairées par des éléments d'image (a1, b1) qui sont à colorer avec du toner, et le deuxième élément d'image (b1) étant placé au niveau du bord extérieur de la zone à colorer.

9. Procédé selon l'une des revendications précédentes, **caractérisé en ce que** les zones déchargées comportent des surfaces tramées déchargées et des parties déchargées de surfaces tramées, et **en ce que** les régions chargées comportent des surfaces tramées chargées et des parties chargées de surfaces tramées.

10. Procédé selon l'une des revendications précédentes, **caractérisé en ce que** les données d'image source d'une image source (32), dont les éléments d'image source (A, B, C, D) sont disposés avec une première résolution prédéterminée (400 dpi) en fonction d'une trame d'image source, sont converties en données d'image cible d'une image cible (3c), dont les éléments d'image cible (a1 à c3) sont disposés avec une deuxième résolution (600 dpi), différant de la première résolution (400 dpi) d'un facteur de conversion (valeur 1, 5), en fonction d'une trame d'image cible.

11. Procédé selon la revendication 10, **caractérisé en ce que** l'image source (22) est divisée en image partielle matricielle (24), et **en ce que**, pour chaque image partielle source (24), on détermine à partir des données d'image source une image partielle cible associée (28) en fonction d'opérations de calcul identiques pour toutes les images partielles (24, 28), l'image partielle cible (28) étant disposée en une position dans l'image cible (26) qui coïncide avec la position de l'image partielle source associée (24) dans l'image source (22).

12. Procédé selon la revendication 10 ou 11, **caractérisé en ce que** la génération des données d'image cible à l'aide des données d'image source pour des éléments d'image cible (a2, b2, c2, b1), dont la zone de surface tramée dans l'image source (22) contient des zones partielles d'au moins deux éléments d'image source (A, B), est effectuée en fonction des données d'image source et des pourcentages de surface des éléments d'image source (A, B) au niveau de l'élément d'image cible (a2, b2, c2, b1).

13. Procédé selon la revendication 11 ou 12, **caractérisé en ce que** chaque image partielle source (24) contient quatre éléments d'image source (A, B, C, D).

14. Procédé selon l'une des revendications 10 à 13, **caractérisé en ce que** le facteur de conversion a la valeur 1,5, la première résolution étant de 400 dpi et la deuxième résolution étant de 600 dpi.

15. Procédé selon l'une des revendications 10 à 13, **caractérisé en ce que** le facteur de conversion a la valeur 2,5, la première résolution étant de 240 dpi et la deuxième résolution étant de 600 dpi.

16. Procédé selon l'une des revendications 10 à 15, **caractérisé en ce que** les données d'image source d'un élément d'image source (A, B, C, D) ont une longueur de mot de un bit, et **en ce que** les données d'image cible d'un élément d'image cible (a1 à c3) sont générées avec une longueur de mot d'au moins deux bits.

17. Procédé selon l'une des revendications 10 à 16, **caractérisé en ce que** la conversion des données d'image source en données d'image cible est effectuée par une logique câblée et/ou par un module programmable dont les instructions sont traitées par un système de traitement de données.

18. Procédé selon l'une des revendications précédentes, **caractérisé en ce que** la source lumineuse est commandée à 64 niveaux, la source lumineuse délivrant une quantité de lumière différente à un chaque niveau.

19. Procédé selon l'une des revendications précédentes, **caractérisé en ce que** la quantité de lumière est commandée par l'intensité et/ou la durée de connexion de la source lumineuse.

20. Procédé selon l'une des revendications précédentes, **caractérisé en ce que** la largeur d'une ligne contenue dans l'image d'impression est modifiée en formant des zones chargées et déchargées de différentes dimensions sur la couche photoconductrice.

21. Procédé selon la revendication 20, **caractérisé en ce que** la largeur des lignes imprimées est déterminée par un agencement de capteurs, **en ce qu'**une comparaison de la largeur de ligne déterminée avec une largeur de ligne prédéterminée est effectuée, et **en ce que** les zones chargées et déchargées d'images d'impression successives sont adaptées en fonction du résultat de la comparaison.

22. Procédé selon la revendication 20 ou 21, **caractérisé en ce que** l'on détermine la largeur de lignes s'étendant dans la direction de transport du matériau de support, de lignes s'étendant transversalement à la direction de transport et/ou de lignes s'étendant obliquement par rapport la direction de transport, la largeur étant adaptée ensuite aux lignes à imprimer de façon à générer des lignes avec une largeur de ligne uniforme.

23. Procédé selon l'une des revendications précédentes, **caractérisé en ce que** l'on commande des sources lumineuses d'un générateur de caractères.

24. Système d'impression électrophotographique destiné à générer une image d'impression, lequel système d'impression comporte :
des cellules de trame disposées en matrice auxquelles sont associés des éléments d'image (a1, b1) permettant de générer une ligne d'une image d'impression,
au moins un premier élément d'image (a1) et un deuxième élément d'image (a2) de cellules de trame adjacentes déterminant la largeur de la ligne,
une source lumineuse, qui émet une quantité de lumière en fonction de données associées à chaque élément d'image, de façon à modifier la charge d'une surface tramée, associée à l'élément d'image respectif, d'une couche photoconductrice photosensible,
la source lumineuse délivrant également, en fonction de sa courbe de distribution de lumière, une partie de la quantité de lumière au moins à des zones partielles, adjacentes à la surface tramée, de cellules de trame voisines,
la source lumineuse amenant à la première surface tramée associée au premier élément d'image (a1) une première quantité de lumière qui décharge la première surface tramée au-dessous d'un seuil de développement (62), ou qui charge la première surface tramée de telle sorte que la charge de la première surface tramée se trouve au-dessus du seuil de développement (62),
la source lumineuse amenant à la deuxième surface tramée associée au deuxième élément d'image (b1) une deuxième quantité de lumière, inférieure à la première quantité de lumière, de sorte que la deuxième quantité de lumière et la partie de la première quantité de lumière qui est incidente à la deuxième surface tramée déchargent une zone partielle, adjacente à la première surface tramée, de la deuxième surface tramée au-dessous du seuil de développement (62), ou de sorte que la deuxième quantité de lumière et la partie de la première quantité de lumière qui est incidente à la deuxième surface tramée chargent une zone partielle, adjacente à la première surface tramée, de la deuxième surface tramée de telle sorte que la charge de cette zone partielle se trouve au-dessus du seuil de développement (62),
et la largeur de la ligne à générer étant déterminée au moins par la première surface tramée et la zone partielle, adjacente à la première surface tramée, de la deuxième surface tramée.

25. Système de traitement de données destiné à convertir des données d'impression, lequel système de traitement de données comporte :
une unité de calcul qui convertit des données d'image source d'une image source (32), dont les éléments d'image source (A, B, C, D) d'une première résolution prédéterminée (400 dpi) sont disposés suivant une première trame d'image source, en données d'image cible d'une image cible (38) dont les éléments d'image cible (a1 à c3) d'une deuxième résolution (600 dpi), différant de la première résolution d'un facteur de conversion (valeur 1,5), sont disposés suivant une trame d'image cible, les données d'image source ayant une longueur de mot de un bit,
**caractérisé en ce que** :
au moins un premier élément d'image cible (a1) et un deuxième élément d'image cible (b1), voisin du premier élément d'image cible (a1), détermine la largeur d'une ligne à générer,
l'unité de calcul génère des données d'image cible ayant une longueur de mot d'au moins deux bits,
et **en ce qu'**une source lumineuse, destinée à éclairer une couche photoconductrice, est commandée avec ces données d'image cible de façon à mettre en oeuvre les étapes opératoires du procédé selon l'une des revendications 1 à 23.

26. Logiciel informatique, comportant des instructions et des données sous forme codée, qui ordonne à un système informatique, après le chargement du logiciel informatique, de mettre en oeuvre les étapes mentionnées dans l'une des revendications 1 à 23.
